# EUROPÄISCHE PATENTSCHRIFT

(11) **EP 3 931 023 B1**
(45) Veröffentlichungstag und Bekanntmachung des Hinweises auf die Patenterteilung: **07.02.2024**
(21) Anmeldenummer: 20706443.7
(22) Anmeldetag: 19.02.2020
(51) Int. Cl.: B60K 35/00, B60W 30/18, B60W 60/00, B60W 50/14

(54) **VERFAHREN ZUM BETREIBEN EINES FAHRERINFORMATIONSSYSTEMS IN EINEM EGO-FAHRZEUG UND FAHRERINFORMATIONSSYSTEM**
METHOD FOR OPERATING A DRIVER INFORMATION SYSTEM IN AN EGO-VEHICLE AND DRIVER INFORMATION SYSTEM
PROCÉDÉ POUR FAIRE FONCTIONNER UN SYSTÈME D'INFORMATION DU CONDUCTEUR DANS UN ÉGO-VÉHICULE ET SYSTÈME D'INFORMATION DU CONDUCTEUR

(30) Priorität: 26.02.2019 DE 102019202587
(43) Veröffentlichungstag der Anmeldung: 05.01.2022
(73) Patentinhaber: VOLKSWAGEN AKTIENGESELLSCHAFT, 38440 Wolfsburg (DE)
(72) Erfinder: SEITZ, Gordon, 38468 Ehra-Lessien (DE); SANDBRINK, Johanna, 38106 Braunschweig (DE); PUHLE, Marie, 38518 Gifhorn (DE); EIGEL, Thomas, 13585 Berlin (DE)
(86) Internationale Anmeldenummer: PCT/EP2020/054307
(87) Internationale Veröffentlichungsnummer: WO 2020/173774

(56) Entgegenhaltungen:
- EP-A1- 3 275 716
- WO-A1-2016/088312
- WO-A1-2017/187622
- JP-A- 2018 203 014
- US-A1- 2017 285 647
- US-B1- 8 676 431

## Beschreibung

Die vorliegende Erfindung betrifft ein Verfahren zum Betreiben eines Fahrerinformationssystems in einem Ego-Fahrzeug sowie ein Fahrerinformationssystem in einem Ego-Fahrzeug.

Moderne Fahrzeuge bieten oft eine umfassende Auswahl verschiedener Systeme, die den Fahrer bei der Steuerung des Fahrzeugs unterstützen und damit zu einer Verbesserung des Komforts und der Sicherheit beitragen. Eine der Herausforderungen in diesem Zusammenhang besteht darin, die Schnittstelle zwischen dem menschlichen Fahrer und der typischerweise rechnerbasierten Steuerung so zu gestalten, dass dem Fahrer alle benötigten und gewünschten Informationen möglichst schnell und leicht erfassbar bereitgestellt werden. Erst dann können die Unterstützungsmöglichkeiten optimal verstanden und genutzt werden. Zudem muss der Fahrer zu jedem Zeitpunkt genau wissen, wie sich sein Fahrzeug in einer bestimmten Situation verhalten wird, welche Unterstützungssysteme aktuell aktiv sind und ob ihre optimale Funktion gewährleistet ist. Er sollte ferner stets wissen, wie die Systeme funktionieren und in welchem Maße manuelle Eingriff notwendig sind.

Die EP 3 275 716 A1 beschreibt ein Verfahren für eine Anzeige in einem Fahrzeug, welches in einem System zur automatisierten Fahrt des Fahrzeugs verwendet wird. Dabei wird eine Fahrroute festgelegt und es wird für das Fahrzeug eine Soll-Trajektorie erzeugt. Während der Fahrt wird eine Fahrerinformationsanzeige ausgegeben, welche ein grafisches Verkehrsteilnehmer-Objekt umfasst, das einen weiteren Verkehrsteilnehmer repräsentiert. Es wird ein Symbol angezeigt, das den Reiseverlauf des eigenen Fahrzeugs so darstellt, dass es einer Fahrbahn in der derzeitigen Szenerie überlagert wird, wie sie sich bei einem Blick durch die Windschutzscheibe ergibt.

In der US 2017/285647 A1 wird eine Fahrzeugsteuerungsvorrichtung bereitgestellt, die an einem Fahrzeug montiert ist. Eine Umgebungserkennungseinheit erfasst Informationen über die Umgebung um das Fahrzeug und versorgt damit die automatische Betriebssteuereinheit. Diese wählt eine vorgeschlagene Fahrlinie als Zielfahrlinie des Fahrzeugs aus und lässt das Fahrzeug entlang der Zielfahrlinie fahren. Die Fahrzeugsteuerungsvorrichtung stellt die Anzeige eines Bildes nicht ausgewählter Fahrlinien zusammen mit der Anzeige eines Bildes der Zielfahrlinie bereit.

In der US 8 676 431 B1 wird ein Fahrzeug beschrieben mit einem Prozessor, der Zielinformationen empfängt, eine Route identifiziert und den aktuellen geografischen Standort des Fahrzeugs bestimmt. Er identifiziert ein Objekt auf der Grundlage von Objektinformationen, die von der Objekterfassungsvorrichtung empfangen werden und bestimmt ein Warnmerkmal des identifizierten Objekts. Ein Objektwarnbild basierend auf dem Warnmerkmal wird ausgewählt und auf dem Display anzeigt.

In der WO 2017/187622 A1 wird ein Fahrzeugsteuerungssystem bereitgestellt, mit einer Steuereinheit für automatisiertes Fahren, die durch Ausführen eines von mehreren Fahrmodi, die unterschiedliche Grade des automatisierten Fahrens aufweisen, automatisch eine Geschwindigkeitssteuerung und/oder Lenksteuerung eines Fahrzeugs ausführt.

Die JP 2018 203014 beschreibt eine Bildanzeigeeinheit, die an einem Fahrzeug angebracht ist, und einem Anzeigeteil zum Anzeigen von Bildern, ein erster Bildteil, der einen Fahrgast im Fahrzeug abbildet und der ein Bild erfasst, das zur Überwachung eines Zustands des Fahrgastes verwendet werden soll, und ein zweiter Bildteil, der den Fahrgast im Fahrzeug abbildet und der ein Bild erfasst, das für Dienste verwendet werden soll, die mit den am Anzeigeteil angezeigten Bildern verbunden sind.

In der WO 2016/088312 A1 erfasst eine Fahrunterstützungsvorrichtung die relativen Positionen von Begrenzungslinien zu einem Fahrzeug und unterstützt das Fahren des Fahrzeugs auf der Grundlage der erfassten Positionsinformationen.

Nachfolgend wird unter einem Fahrerassistenzsystem eine Einrichtung eines Fahrzeugs verstanden, welche den Fahrer beim Fahren des Fahrzeugs unterstützt. Derartige Fahrerassistenzsysteme können als reine Informationssysteme ausgebildet sein, die den Fahrer unterstützen, sie können jedoch auch Einrichtungen ansteuern und regeln, die automatisch die Fortbewegung des Fahrzeugs beeinflussen.

Durch die Verwendung von Fahrerassistenzsystemen können verschiedene Grade von Automatisierung der Fahrzeugsteuerung erreicht werden. Ohne ein aktiviertes Fahrerassistenzsystem beeinflusst der Fahrer direkt die Bewegung des Fahrzeugs. Es werden allenfalls Signale oder Bewegungen von durch den Fahrer betätigten Bedienelementen, wie der Pedalerie, dem Schaltknüppel oder dem Lenkrad, an entsprechende Einrichtungen des Fahrzeugs übertragen, welche die Fortbewegung des Fahrzeugs beeinflussen. Eine derartige Fortbewegung des Fahrzeugs entspricht dem geringsten Grad der Automatisierung.

Bei einem höheren Grad der Automatisierung wird zum Teil automatisch in Einrichtungen eingegriffen, welche der Fortbewegung des Fahrzeugs dienen. Beispielsweise wird in die Lenkung des Fahrzeugs oder die Beschleunigung in positiver oder negativer Richtung eingegriffen. Bei einem noch höheren Grad der Automatisierung wird soweit in Einrichtungen des Fahrzeugs eingegriffen, dass bestimmte Fortbewegungsarten des Fahrzeugs, zum Beispiel eine Geradeausfahrt, automatisch ausgeführt werden können. Beim höchsten Grad der Automatisierung können etwa Routen eines Navigationssystems im Wesentlichen automatisch gefahren werden oder das Fahrzeug kann beispielsweise auf einer Autobahn auch ohne eine vorgegebene Route automatisiert fahren. Dabei wird jedoch in der Regel sichergestellt, dass der Fahrer auch bei einem hohen Automatisierungsgrad die Kontrolle über die Fahrzeugführung durch aktives Lenken oder Betätigen der Pedalerie sofort wieder zurückgewinnen kann. Zudem kann die Kontrolle an den Fahrer zurückgegeben werden, wenn ein Systemfehler auftritt oder eine nicht automatisch befahrbare Strecke erkannt wird.

Dabei erfüllen die verschiedenen Fahrerassistenzsysteme auch verschiedene Sicherheitsfunktionen. Bei einem geringen Grad der Automatisierung werden dem Fahrer über ein Fahrerassistenzsystem oder mehrere Fahrerassistenzsysteme nur Informationen ausgegeben, die den Fahrer in der Art und Weise, wie er das Fahrzeug fortbewegt, beeinflussen. In einem höheren Grad der Sicherheitsfunktionen werden Warnungen ausgegeben, die eine unmittelbare Reaktion des Fahrers erfordern. Bei diesem Grad der Automatisierung greifen die Fahrerassistenzsysteme jedoch nicht aktiv und automatisch in die Funktion der Einrichtungen ein, welche die Fortbewegung des Fahrzeugs beeinflussen. In einem noch höheren Grad der Automatisierung wird zum Teil automatisch in Einrichtungen eingegriffen, welche der Fortbewegung des Fahrzeugs dienen. Bei einem noch höheren Grad der Automatisierung wird soweit in Einrichtungen des Fahrzeugs eingegriffen, welche die Fortbewegung des Fahrzeugs beeinflussen, dass bestimmte Manöver des Fahrzeugs automatisch ausgeführt werden können, wie beispielsweise eine Vollbremsung oder ein gezieltes Ausweichmanöver, um eine Kollision zu vermeiden.

Durch die Hinweise, die von Fahrerassistenzsystemen ausgegeben werden, wird der Fahrer des Fahrzeugs auf bestimmte Gefahren aufmerksam gemacht. Dies erhöht die Sicherheit beim Führen des Fahrzeugs. Bei einem aktiven Eingriff eines Fahrerassistenzsystems in die Fortbewegung des Fahrzeugs können auch dann gefährliche Fahrsituationen, wie Kollisionen oder unkontrollierte Bewegungen des Fahrzeugs, vermieden werden, wenn der Fahrer nicht direkt in das Fahrgeschehen eingreift. Bei den Sicherheitsfunktionen des Fahrerassistenzsystems behält jedoch der Fahrer insbesondere stets die volle Kontrolle und Verantwortung über die Fahrsituation. Das Fahrerassistenzsystem greift zum Beispiel bei einer Kollisionsgefahr ein oder wenn der Fahrer etwa aus gesundheitlichen Gründen nicht mehr in der Lage ist, das Fahrzeug zu führen.

Neben der gegebenenfalls direkten Einwirkung auf die Steuerung des Fahrzeugs ist bei Fahrerassistenzsystemen typischerweise vorgesehen, dass der Fahrer mit einer bestimmten Detailtiefe über die Tätigkeit des Fahrerassistenzsystems informiert wird. Beispielsweise kann dies mittels optisch, akustisch oder haptisch wahrnehmbarer Signale erfolgen. Dadurch wird sichergestellt, dass der Fahrer den Einfluss eines Fahrerassistenzsystems auf die Fahrt einschätzen und gegebenenfalls steuernd eingreifen kann: Ferner soll der Fahrer typischerweise automatische Eingriffe in die Steuerung frühzeitig erkennen, um nicht von ihnen überrascht zu werden.

Fahrerassistenzsysteme, die teilweise automatisch in die Steuerung des Fahrzeugs eingreifen können und/oder durch Warnungen auf potentielle Gefahrensituationen hinweisen, können insbesondere eine Quersteuerung oder eine Längssteuerung des Fahrzeugs betreffen. Auch Kombinationen dieser grundlegenden Elemente der Fahrzeugsteuerung sind denkbar. Die Quersteuerungskomponente betrifft insbesondere die Position des Fahrzeugs senkrecht zur Fahrtrichtung, also etwa die sogenannte Querablage auf einer Fahrspur oder Fahrbahn. So kann etwa ein Assistent zum Halten einer Spur das Überfahren einer Fahrspurbegrenzung vermeiden oder das Fahrzeug kann in der Mitte einer Fahrspur geführt werden. Ferner kann der Fahrer bei einem Spurwechsel oder bei einem Überholvorgang unterstützt werden. Die Längssteuerung betrifft insbesondere die Geschwindigkeit des Fahrzeugs in Fahrtrichtung, die beispielsweise in Abhängigkeit von gesetzlichen Bestimmungen und Straßenbedingungen sowie einem einzuhaltenden Sicherheitsabstand zu anderen Verkehrsteilnehmern bestimmt wird. Ein entsprechendes Fahrerassistenzsystem kann den Fahrer etwa beim Halten einer vorgegebenen Geschwindigkeit und/oder eines Abstandes zu einem vorausfahrenden Fahrzeug unterstützen. Ferner kann vermieden werden, dass das eigene Ego-Fahrzeug auf einer bestimmten Seite überholt; insbesondere wird ein Rechtsüberholen bei Rechtsverkehr beziehungsweise ein Linksüberholen bei Linksverkehr vermieden oder es werden entsprechende Warnungen erzeugt.

Es ist für den Fahrer eines Fahrzeugs besonders wichtig, den voraussichtlich zu befahrenden Weg zu kennen. Ein wesentlicher Faktor ist hierbei das Verhalten eines vorausfahrenden Fahrzeugs.

Der vorliegenden Erfindung liegt die Aufgabe zugrunde, ein Verfahren zum Betreiben eines Fahrerinformationssystems in einem Ego-Fahrzeug bereitzustellen, bei dem der Fahrer besonders leicht erfassen kann, welche Steuerungsmaßnahmen in näherer Zukunft für das Ego-Fahrzeug vorgenommen werden sollen.

Erfindungsgemäß wird diese Aufgabe durch ein Verfahren mit den Merkmalen des Anspruchs 1 und ein Fahrerinformationssystem mit den Merkmalen des Anspruchs 8 gelöst. Vorteilhafte Ausgestaltungen und Weiterbildungen ergeben sich aus den abhängigen Ansprüchen.

Bei dem erfindungsgemäßen Verfahren wird ein weiterer Verkehrsteilnehmer in einem vor dem Ego-Fahrzeug liegenden Fahrbahnbereich erfasst. Durch ein Fahrerassistenzsystem für eine zumindest teilweise automatische Quersteuerung des Ego-Fahrzeugs wird in Abhängigkeit von dem weiteren Verkehrsteilnehmer eine Soll-Trajektorie des Ego-Fahrzeugs erzeugt. Es wird eine Fahrerinformationsanzeige erzeugt und ausgegeben, wobei die Fahrerinformationsanzeige ein grafisches Verkehrsteilnehmer-Objekt umfasst, das den weiteren Verkehrsteilnehmer repräsentiert. Ferner umfasst die Fahrerinformationsanzeige ein Trajektorien-Objekt, welches die Soll-Trajektorie des Ego-Fahrzeugs repräsentiert.

Bei dem Verfahren kann der Fahrer vorteilhafterweise besonders einfach erkennen, wie sich das Ego-Fahrzeug weiter bewegen wird.

Bei dem erfindungsgemäßen Verfahren wird eine Fahrerinformationsanzeige erzeugt und ausgegeben. Eine solche Anzeige kann auf unterschiedliche Weisen ausgebildet sein und kann an sich bekannte Elemente umfassen. Die Erzeugung und Ausgabe der Anzeige erfolgen insbesondere auf an sich bekannte Weise mittels hierzu eingerichteter Rechenvorrichtungen und Anzeigevorrichtungen. Die durch die Fahrerinformationsanzeige ausgegebene Anzeige umfasst Ausgaben, die für das Steuern des Fahrzeugs und seinen Fahrbetrieb von Relevanz sind. Dies sind insbesondere Bewegungsdaten oder Zustände von Einrichtungen des Fahrzeugs sowie gegebenenfalls Informations- und Warnausgaben von Fahrerinformationssystemen.

Die Anzeige kann mittels bekannter Anzeigeeinheiten ausgegeben werden, etwa mittels eines Displays, insbesondere an einer Mittelkonsole des Ego-Fahrzeugs oder in einem Kombiinstrument. Ferner kann eine Ausgabe mittels einer Sichtfeldanzeige so erfolgen, dass zumindest ein Teil der Fahrerinformationsanzeige so in ein Auge des Nutzers projiziert wird, dass die Anzeige der optischen Wahrnehmung der physischen Umgebung überlagert erscheint. Insbesondere können dabei Verfahren und Vorrichtungen aus dem Bereich der "erweiterten Realität" (englisch: *augmented reality*) verwendet werden. Bekannte Sichtfeldanzeigen, etwa Head-up-Displays, nutzen beispielsweise die Windschutzscheibe eines Fahrzeugs oder eine Brille zur Projektion.

Die ausgegebene Anzeige umfasst insbesondere keine Ausgabe eines Videobildes, das durch eine Kamera des Ego-Fahrzeugs erfasst wird. Stattdessen werden die ausgegebenen Anzeigedaten von einer Recheneinheit erzeugt, gegebenenfalls anhand von Videodaten einer Kamera, und die ausgegebenen grafischen Objekte sind gegenüber realen Objekten schematisch oder vereinfacht dargestellt, auch wenn sie eine hohe Spezifizität aufweisen.

Die Fahrerinformationsanzeige kann ferner Bedienobjekte oder Bedienelemente umfassen, insbesondere nach Art einer grafischen Bedienoberfläche. Derartige Objekte können beispielsweise einstellbare Parameter oder aktivierbare und deaktivierbare Funktionen repräsentieren. Sie sind insbesondere auswählbar und/oder betätigbar gebildet sein, wobei Nutzereingaben auf an sich bekannte Weise erfasst und mit Bezug zu dem jeweiligen Objekt ausgewertet werden.

Die Soll-Trajektorie wird auf an sich bekannte Weise erzeugt, etwa mittels eines Spurhalteassistenten. Alternativ oder zusätzlich können weitere Arten von Assistenzsystemen vorgesehen sein, etwa ein Navigationssystem oder ein System zur autonomen Steuerung des Ego-Fahrzeugs. Insbesondere erzeugt das Fahrerassistenzsystem ferner Signale zur Steuerung des Ego-Fahrzeugs in eine Richtung quer zur Fahrtrichtung, etwa eine Lenkeinrichtung des Ego-Fahrzeugs.

Das Trajektorien-Objekt wird insbesondere so gebildet, dass dadurch die Soll-Trajektorie für das Ego-Fahrzeug dargestellt wird. Die Trajektorie bezeichnet einen räumlichen Pfad für die Bewegung des Ego-Fahrzeugs auf der Fahrbahn. Das Trajektorien-Objekt weist dabei Merkmale auf, welche die Soll-Trajektorie charakterisieren, etwa gerade oder gekrümmte Abschnitte. Die Größenverhältnisse des Trajektorien-Objekts sind dabei so gebildet, dass für den Fahrer eine physische Trajektorie auf der Fahrbahn, auf welcher sich das Ego-Fahrzeug befindet, erfassbar ist. Insbesondere kann der Fahrer anhand der Fahrerinformationsanzeige Positionen auf der Fahrbahn identifizieren, bei denen die Soll-Trajektorie von einer Geradeausfahrt abweicht und gekrümmte Abschnitte vorgesehen sind.

Insbesondere ist anhand des Trajektorien-Objekts die tatsächliche geplante Soll-Trajektorie für das Ego-Fahrzeug erfassbar. Das heißt, das Trajektorien-Objekt gibt nicht lediglich Fahrhinweise aus, etwa einen Hinweis auf eine Richtungsänderung, einen Spurwechsel oder eine Änderung der Geschwindigkeit, sondern es wird der tatsächliche von dem Ego-Fahrzeug zu befahrende Pfad ausgegeben. Dies erfolgt insbesondere anhand eines Fahrspur-Objekts, das eine Fahrbahn repräsentiert, auf der sich das Ego-Fahrzeug bewegt. Dabei ist das Trajektorien-Objekt an dem Fahrbahn-Objekt so angeordnet, dass Positionen der physischen Fahrbahn, auf der sich das Ego-Fahrzeug bewegt, Merkmalen des Trajektorien-Objekts zugeordnet werden können. Beispielsweise kann anhand der Darstellung identifiziert werden, an welcher Stelle das Trajektorien-Objekt eine Krümmung aufweist und welcher Position und Krümmung der Soll-Trajektorie auf der physischen Fahrbahn dies entspricht.

Bei einer Ausbildung des erfindungsgemäßen Verfahrens umfasst die Fahrerinformationsanzeige ein grafisches Fahrspurobjekt, das einen vor dem Ego-Fahrzeug liegenden Fahrbahnverlauf repräsentiert. Dabei ist das Fahrspurobjekt so gebildet, dass es einer perspektivischen Darstellung des Fahrbahnverlaufs entspricht und einen Krümmungsradius so umfasst, dass der tatsächliche Krümmungsradius einer Kurve des Fahrbahnverlaufs ausgegeben wird. Die Fahrerinformationsanzeige erlaubt dadurch vorteilhafterweise eine besonders realistische Einschätzung der Fahrsituation.

Der Fahrbahnverlauf und insbesondere der tatsächliche Krümmungsradius der Kurve wird etwa anhand von Umfelddaten erfasst. Beispielsweise können Kartendaten Informationen über den Fahrbahnverlauf umfassen, ferner können von Sensoren des Ego-Fahrzeugs erfasste Umfelddaten verwendet werden.

Der erfasste Fahrbahnverlauf umfasst insbesondere Informationen darüber, ob und in welchem Maße ein von dem Ego-Fahrzeug befahrener Fahrweg eine seitliche Krümmung aufweist. Die erfassten Daten können auch weitere Eigenschaften der Fahrbahn betreffen, etwa eine Neigung der Fahrbahn in eine Richtung längs oder quer zur Fahrtrichtung des Ego-Fahrzeugs. Insbesondere umfassen die über den Fahrbahnverlauf erfassten Daten Informationen zur geometrischen Beschaffenheit der Fahrbahn. Das Ego-Fahrzeug fährt beispielsweise auf einer Straße, die mehrere Fahrspuren aufweisen kann. Typischerweise folgt das Ego-Fahrzeug bei seiner Fahrt dem Verlauf einer der Fahrspuren, wobei gegebenenfalls ein Spurwechsel zu einer anderen Fahrspur vorgenommen werden kann. Die Erfassung des Fahrbahnverlaufs kann den Verlauf der aktuell genutzten Fahrspur oder mehrerer Fahrspuren umfassen.

Das grafische Fahrspurobjekt ist insbesondere so gebildet, dass es dem Nutzer beziehungsweise dem Fahrer des Ego-Fahrzeugs erlaubt, grafische Elemente der Fahrerinformationsanzeige in einen räumlichen Bezug zu der tatsächlich vor dem Ego-Fahrzeug liegenden Fahrbahn zu bringen. Das Fahrspurobjekt kann dabei die aktuell vom Ego-Fahrzeug verwendete Fahrspur betreffen. Es kann ferner eine Fahrspur betreffen, auf der das Ego-Fahrzeug voraussichtlich eine Kurve durchfahren wird, insbesondere wenn vor dem Einfahren in die Kurve noch ein Spurwechsel durchgeführt werden soll. Das Fahrspurobjekt kann ferner mehrere Fahrspuren umfassen, insbesondere die aktuell vom Ego-Fahrzeug befahrene Fahrspur und zumindest eine räumlich benachbarte Fahrspur, insbesondere eine benachbarte Fahrspur für die gleiche Fahrtrichtung. Allerdings kann die Darstellung auch ein eigenes Fahrspurobjekt und zumindest ein Nachbar-Fahrspurobjekt umfassen.

Das grafische Fahrspurobjekt repräsentiert den tatsächlichen Fahrbahnverlauf insbesondere so, dass der Nutzer eine virtuelle Position innerhalb der Fahrerinformationsanzeige einem physischen Ort auf der vor dem Ego-Fahrzeug befindlichen Fahrbahn zuordnen kann. Die Darstellung eines Ego-Objekts, welches das Ego-Fahrzeug repräsentiert, kann so erfolgen, dass eine verbesserte Orientierung des Fahrers innerhalb der Fahrerinformationsanzeige und relativ zu dem dargestellten Fahrspurobjekt erreicht wird. Die Darstellung des Fahrspurobjekts ist dabei gegenüber der Realität in ihrem Detailgehalt reduziert oder schematisch ausgebildet. Insbesondere kann die Ansicht der physischen Fahrbahn aus der Perspektive des Fahrers des Ego-Fahrzeugs durch eine Transformation mathematisch auf das grafisches Fahrspurobjekt abgebildet werden.

Die Fahrerinformationsanzeige umfasst insbesondere keine Darstellung von Bilddaten, die von einer Kamera erfasst werden. Stattdessen werden die Ausprägungen der dargestellten Objekte durch eine Recheneinheit erzeugt.

Das grafische Fahrspurobjekt umfasst dabei insbesondere eine perspektivische Ansicht einer gekrümmten Fahrbahn, wobei die Krümmung des grafischen Fahrspurobjekts im Wesentlichen dem für den physischen Fahrbahnverlauf erfassten Krümmungsradius entspricht. Der tatsächliche Fahrbahnverlauf wird so besonders realistisch durch das grafische Fahrspurobjekt repräsentiert. Das Fahrspurobjekt wird dabei insbesondere aus einer Perspektive gebildet, die einer Ansicht von einer virtuellen Position knapp oberhalb des Ego-Fahrzeugs entspricht.

Bei einer Ausbildung wird das grafische Fahrspurobjekt so gebildet, dass es einer perspektivischen Darstellung eines Verlaufs der Fahrbahn entspricht und einen Krümmungsradius so umfasst, dass ein tatsächlicher Krümmungsradius ausgegeben wird. Der Fahrer kann dadurch vorteilhafterweise die Fahrsituation besonders einfach erfassen. Insbesondere wird hierdurch das grafisches Fahrspurobjekt besonders realistisch beziehungsweise mit besonders relevanten Merkmalen der tatsächlichen Fahrbahn dargestellt.

Die Umfelddaten, insbesondere zum Erfassen des Fahrbahnverlaufs, werden etwa mittels Sensoren des Ego-Fahrzeugs erfasst, beispielsweise mittels einer Kamera, eines LIDAR-Sensors oder eines Radarsensors. Dadurch stehen vorteilhafterweise Informationen über die tatsächlichen Umgebungsbedingungen in einer bestimmten Fahrsituation zur Verfügung. Insbesondere können Daten genutzt werden, die durch an sich bekannte Fahrerassistenzsysteme bereitgestellt werden, etwa von einem Spurwechsel- oder Überholassistenten. Die Fahrerinformationsanzeige erlaubt dadurch vorteilhafterweise eine besonders realistische Einschätzung der Fahrsituation.

Die Sensoren des Ego-Fahrzeugs weisen jeweils einen Erfassungsbereich auf. Beispielsweise kann ein Radarsensor Daten in einem bestimmten räumlichen Winkel und bis zu einer bestimmten Entfernung vom Ego-Fahrzeug erfassen. Die Sensoren können dabei in Fahrtrichtung, gegen die Fahrtrichtung oder zur Seite hin gerichtet sein und in entsprechend angeordneten Erfassungsbereichen Daten erfassen.

Bei einer Weiterbildung wird eine Position des Ego-Fahrzeugs bestimmt und die Umfelddaten werden mittels Kartendaten und anhand der bestimmten Position erfasst. Dies erlaubt es vorteilhafterweise, von den Kartendaten umfasste Umfelddaten und weitere Informationen für die Fahrerinformationsanzeige zu nutzen.

Insbesondere können die Kartendaten Informationen über einen Krümmungsradius einer Kurve des Verlaufs der Fahrbahn umfassen. Zum Beispiel kann ferner erkannt werden, ob eine bestimmte Fahrspur für Gegenverkehr freigegeben ist, etwa in einer Einbahnstraße oder auf einer Autobahn.

Die Position des Ego-Fahrzeugs wird dabei auf an sich bekannte Weise erfasst, beispielsweise mittels eines Navigationssatellitensystems, etwa GPS. Auch die Kartendaten werden auf an sich bekannte Weise bereitgestellt, etwa von einer Speichereinheit eines Navigationssystems des Ego-Fahrzeugs oder von einer externen Einheit, zu der zumindest eine zeitweise datentechnische Verbindung besteht.

Die datentechnische Verbindung zwischen dem Ego-Fahrzeug und einer externen Einheit, insbesondere einem externen Server, kann insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Ferner kann die Datenverbindung durch den Anschluss eines Datenkabels erfolgen. Die Verbindung kann auch über eine andere Einheit hergestellt werden, die selbst eine Verbindung zu dem externen Server herstellen kann. Beispielsweise kann eine datentechnische Verbindung zwischen dem Ego-Fahrzeug und einem mit dem Internet verbundenen Mobiltelefon bestehen, etwa durch ein Datenkabel oder eine Funkverbindung, beispielsweise per Bluetooth. Insbesondere kann die Verbindung zu dem externen Server über das Internet hergestellt werden.

Es können Verfahren aus dem Bereich der Kommunikation zwischen Fahrzeugen und anderen Einrichtungen (*Car2X*) verwendet werden. Beispielsweise kann eine Kommunikation zu einer Infrastruktureinrichtung (*Car2Infrastructure*) oder einem weiteren Fahrzeug (Car2Car) erfolgen.

Insbesondere können Umfelddaten, die mittels eines Sensors detektiert werden, mit Kartendaten fusioniert werden, um Informationen zu ergänzen oder ihre Plausibilität zu prüfen. Insbesondere wird auf diese Weise eine möglichst umfassende Datenbasis erhalten und die erfassten Daten können dadurch besonders einfach ergänzt werden. So kann beispielsweise anhand der Kartendaten bestimmt werden, ob auf einer Fahrspur mit Gegenverkehr zu rechnen ist, und in einem weiteren Schritt kann mittels Sensordaten bestimmt werden, ob tatsächlich Gegenverkehr auf der Fahrspur detektiert wird.

Bei einer weiteren Ausbildung umfasst die Fahrerinformationsanzeige ein Ego-Objekt, welches das Ego-Fahrzeug repräsentiert. Dabei erstreckt sich das Trajektorien-Objekt von dem Ego-Objekt zu dem Verkehrsteilnehmer-Objekt. Dadurch kann vorteilhafterweise eine Trajektorie in Abhängigkeit von einem vorausfahrenden Fahrzeug besonders deutlich dargestellt werden.

Insbesondere wird dabei eine Folgefahrt durchgeführt. Dies kann beispielsweise dann erfolgen, wenn keine Fahrbahnmarkierungen bestimmt werden konnten, die zu einer Quersteuerung des Ego-Fahrzeugs verwendet werden könnten. In diesem Fall wird die Position eines vorausfahrenden Verkehrsteilnehmers auf der Fahrspur erfasst und es wird davon ausgegangen, dass es sich um eine sicher befahrbare Trajektorie für das Ego-Fahrzeug handelt.

Beim Erfassen des weiteren Verkehrsteilnehmers, der insbesondere einen vorausfahrendes Fahrzeug ist, wird insbesondere die Position des Verkehrsteilnehmers relativ zum Ego-Fahrzeug erfasst, etwa ein Querversatz relativ zum Ego-Fahrzeug. Anhand der erfassten Daten kann nunmehr eine Quersteuerung des Ego-Fahrzeugs so erfolgen, dass die Trajektorie des Ego-Fahrzeugs der Trajektorie des weiteren Verkehrsteilnehmers folgt. Zur Steuerung wird eine Soll-Trajektorie des Ego-Fahrzeugs erzeugt und seine Bewegung wird entlang dieser Soll-Trajektorie gesteuert.

Bei einer Weiterbildung wird ein geplanter Spurwechsel das Ego-Fahrzeugs erfasst und die Soll-Trajektorie des Ego-Fahrzeugs wird für den Spurwechsel bestimmt. Insbesondere wird die Soll-Trajektorie dabei in Abhängigkeit davon bestimmt, ob und in welcher Weise er einen Spurwechsel sicher durchgeführt werden kann. Der Fahrer kann dadurch vorteilhafterweise besonders leicht eine sichere Trajektorie für den Spurwechsel erfassen.

Der geplante Spurwechsel wird beispielsweise anhand einer Betätigung eines Fahrtrichtungsanzeigers durch den Fahrer oder anhand einer Ausgabe des Fahrerassistenzsystems erfasst. Anschließend analysiert das Fahrerassistenzsystem die Verkehrssituation im Umfeld des Ego-Fahrzeugs und bestimmt die Sicherheit eines Spurwechsels. Wenn ein sicherer Spurwechsel durchgeführt werden kann, wird eine entsprechende Soll-Trajektorie erzeugt und ausgegeben. Die Soll-Trajektorie ist dabei ein Pfad, auf dem sich das Ego-Fahrzeug bewegen soll, um die benachbarte Fahrspur zu erreichen.

Das Trajektorien-Objekt wird insbesondere so erzeugt, dass es die tatsächlich zu fahrende Trajektorie des Ego-Fahrzeugs in der Fahrerinformationsanzeige ausgibt. Das heißt, es wird nicht lediglich ein Pfeil oder anderes grafisches Element ausgegeben, dass eine generelle Bewegungsrichtung von der aktuellen zur benachbarten Fahrspur darstellt, sondern die tatsächlich zu befahrende Trajektorie auf der Fahrbahn wird in der Fahrerinformationsanzeige ausgegeben.

Insbesondere kann anhand von Kartendaten bestimmt werden, ob der Spurwechsel sicher durchführbar ist. Dies erlaubt es vorteilhafterweise, von den Kartendaten umfasste Informationen über Spurwechsel- oder Überholmöglichkeiten auf einer befahrenen Fahrbahn zu nutzen.

Zum Beispiel kann erkannt werden, ob an einer Position das Wechseln der Spur erlaubt ist, beispielsweise im Bereich eines Überholverbots. Ferner können die Kartendaten Informationen darüber umfassen, ob an einer bestimmten Position ein Spurwechsel generell als sicher angenommen werden kann. Insbesondere wird auf diese Weise eine möglichst umfassende Datenbasis erhalten und die erfassten Daten können dadurch besonders einfach ergänzt werden. Insbesondere können die Kartendaten bereits Informationen über den Krümmungsradius einer Kurve des Fahrbahnverlaufs umfassen.

Ein Fahrspurwechsel ist dann sicher, wenn keine Kollisionsgefahr mit einem weiteren Verkehrsteilnehmer oder einem anderen Objekt besteht; gegebenenfalls können rechtliche Einschränkungen wie Überholverbote oder Spurwechselverbote berücksichtigt werden. Mittels der Sensoren werden Objekte und weitere Verkehrsteilnehmer in einer Umgebung des Ego-Fahrzeugs erfasst. Von Relevanz sind besonders Verkehrsteilnehmer auf derjenigen benachbarten Fahrspur, für die ein Spurwechsel bewertet werden soll.

Es wird erfasst, ob sich ein anderer Verkehrsteilnehmer aktuell in einem Bereich der benachbarten Fahrspur befindet, den das Ego-Fahrzeug bei einem Spurwechsel befahren würde. Ferner wird erfasst, ob sich ein anderer Verkehrsteilnehmer zu einem zukünftigen Zeitpunkt in einem solchen Bereich befinden wird, wenn das Ego-Fahrzeug diesen Bereich befahren würde, wenn es einen Spurwechsel vornehmen würde. Dies kann andere Verkehrsteilnehmer betreffen, die aktuell neben dem Ego-Fahrzeug fahren, die sich mit höherer Geschwindigkeit von hinten nähern oder die mit geringerer Geschwindigkeit in Fahrtrichtung vor dem Ego-Fahrzeug fahren. Ferner kann auch eine Beschleunigung eines weiteren Verkehrsteilnehmers erfasst und berücksichtigt werden.

Alternativ oder zusätzlich kann die Sicherheit eines Spurwechsels auf andere Weise bestimmt werden. Dabei können ferner andere Umfelddaten erfasst werden und es können verschiedene Merkmale anhand der Umfelddaten bestimmt werden.

Bei einer Weiterbildung umfasst die Fahrerinformationsanzeige ein grafisches Nachbar-Fahrspurobjekt, das die benachbarte weitere Fahrspur repräsentiert und ein grafisches Darstellungsmerkmal aufweist, das in Abhängigkeit davon gebildet wird, ob der Spurwechsel sicher durchführbar ist. Das grafische Darstellungsmerkmal des Nachbar-Spurobjekts kann beispielsweise eine Helligkeit, Farbe, Transparenz, einen Kontrast oder ein Muster betreffen. Der Fahrer kann so vorteilhafterweise besonders einfach, insbesondere durch die Darstellung eines flächigen grafischen Objekts, erkennen, ob ein sicherer Spurwechsel möglich ist.

Alternativ oder zusätzlich können andere, an sich bekannte Weisen der grafischen Darstellung und insbesondere der Hervorhebung bestimmter Objekte in einer grafischen Darstellung genutzt werden. Beispielsweise können auch dynamische Darstellungsweisen verwendet werden, etwa indem sich ein Parameter der Darstellung periodisch ändert, wie beispielsweise durch Änderung der Helligkeit bei Blinken oder Pulsieren oder durch einen periodischen Farbwechsel.

Erfindungsgemäß wird ein darstellungsrelevantes Merkmal des weiteren Verkehrsteilnehmers erfasst und das dem weiteren Verkehrsteilnehmer zugeordnete Verkehrsteilnehmer-Objekt wird in Abhängigkeit von dem darstellungsrelevanten Merkmal gebildet. Der Fahrer kann dadurch vorteilhafterweise besonders leicht erkennen, in welchem Verhältnis Objekte der Fahrerinformationsanzeige zu physischen Objekten in seinem Umfeld stehen.

Das Verkehrsteilnehmer-Objekt stellt dabei ein besonders realistisches Abbild des weiteren Verkehrsteilnehmers zur Verfügung, ohne dass hierzu eine direkte Ausgabe von Bild- oder Videodaten einer Kamera erfolgen muss. Stattdessen ist das Verkehrsteilnehmer-Objekt schematisch gebildet, wobei verschiedene Merkmale und Details der optisch wahrnehmbaren Erscheinung ausgegeben werden können.

Darstellungsrelevante Merkmale eines Verkehrsteilnehmers sind insbesondere solche Merkmale, welche die Darstellung des Verkehrsteilnehmers und des ihn repräsentierenden Verkehrsteilnehmer-Objekts an sich betreffen und nicht zum Beispiel seine Anordnung innerhalb der Fahrerinformationsanzeige. Insbesondere sind darstellungsrelevante Merkmale solche Merkmale, die eine optische Wahrnehmung des weiteren Verkehrsteilnehmers von außen charakteristisch beeinflussen. Diese Merkmale erleichtern es daher, wenn sie von dem Verkehrsteilnehmer-Objekt in der Fahrerinformationsanzeige wiedergegeben werden, denen physisch im Umfeld vorhandenen Verkehrsteilnehmer zu erkennen.

Bei einer Ausbildung betrifft das darstellungsrelevante Merkmal eine Farbe, Form und/oder Größe des weiteren Verkehrsteilnehmers. Das entsprechend dargestellte Verkehrsteilnehmer-Objekt erlaubt es daher dem Fahrer vorteilhafterweise, den weiteren Verkehrsteilnehmer in seinem Umfeld besonders einfach zu erkennen.

Das darstellungsrelevante Merkmal betrifft erfindungsgemäß einen Zustand einer Beleuchtungsanlage des weiteren Verkehrsteilnehmers, etwa den Zustand einer Rückleuchte oder eines Fahrtrichtungsanzeigers. Es betrifft insbesondere nicht einen Abstand oder eine Position des weiteren Verkehrsteilnehmers zum Ego-Fahrzeug. Vielmehr prägen diese Merkmale die äußere Erscheinung des weiteren Verkehrsteilnehmers und das Verkehrsteilnehmer-Objekt wird daher so erzeugt, dass es den weiteren Verkehrsteilnehmer möglichst realistisch wiedergibt.

Das darstellungsrelevante Merkmal kann beispielsweise mittels Sensoren des Ego-Fahrzeugs detektiert werden, insbesondere mittels einer Kamera. Dadurch kann vorteilhafterweise ein typischerweise in modernen Fahrzeugen bereits vorhandener Sensor genutzt werden, um besonders wichtige Merkmale betreffend die äußere Wahrnehmung des weiteren Verkehrsteilnehmers zu erfassen. Mittels einer Kamera kann beispielsweise besonders leicht erfasst werden, welche Farbe der weitere Verkehrsteilnehmer aufweist.

Andere Sensoren des Ego-Fahrzeugs können beispielsweise ein Lidar- oder Radarsensor sein. Dadurch stehen vorteilhafterweise Informationen über die tatsächlichen Umgebungsbedingungen in einer bestimmten Fahrsituation zur Verfügung. Insbesondere können Daten genutzt werden, die durch an sich bekannte Fahrerassistenzsysteme bereitgestellt werden, etwa von einem Spurwechsel- oder Überholassistenten. Die Fahrerinformationsanzeige erlaubt dadurch vorteilhafterweise eine besonders realistische Einschätzung der Fahrsituation.

Die Sensoren des Ego-Fahrzeugs weisen jeweils einen Erfassungsbereich auf. Beispielsweise kann eine Kamera Daten in einem bestimmten räumlichen Winkel und bis zu einer bestimmten Entfernung vom Ego-Fahrzeug erfassen. Die Sensoren können dabei in Fahrtrichtung, gegen die Fahrtrichtung oder zur Seite hin gerichtet sein und in entsprechend angeordneten Erfassungsbereichen Daten erfassen.

Bei einer Weiterbildung wird eine datentechnische Verbindung zwischen dem Ego-Fahrzeug und dem weiteren Verkehrs einem aufgebaut und das darstellungsrelevante Merkmal wird mittels der datentechnischen Verbindung erfasst. Dadurch können vorteilhafterweise direkte Kommunikationsmöglichkeiten zwischen Fahrzeugen besonders effizient genutzt werden.

Die datentechnische Verbindung zwischen dem Ego-Fahrzeug und dem weiteren Verkehrsteilnehmer kann insbesondere drahtlos erfolgen, beispielsweise durch ein lokales Netzwerk oder ein größeres Netzwerk, beispielsweise das Internet. Ferner kann die Verbindung über ein Telekommunikationsnetz, etwa ein Telefonnetz, oder ein drahtloses lokales Netzwerk (WLAN) hergestellt werden. Ferner kann die Datenverbindung durch den Anschluss eines Datenkabels erfolgen. Die Verbindung kann auch über eine andere Einheit hergestellt werden, die selbst eine Verbindung zu dem externen Server herstellen kann. Beispielsweise kann eine datentechnische Verbindung zwischen dem Ego-Fahrzeug und einem mit dem Internet verbundenen Mobiltelefon bestehen, etwa durch ein Datenkabel oder eine Funkverbindung, beispielsweise per Bluetooth. Insbesondere kann die Verbindung zu dem externen Server über das Internet hergestellt werden.

Es können Verfahren aus dem Bereich der Kommunikation zwischen Fahrzeugen und anderen Einrichtungen (*Car2X*) verwendet werden. Beispielsweise kann eine Kommunikation zu einer Infrastruktureinrichtung (*Car2Infrastructure*) oder einem weiteren Fahrzeug (*Car2Car*) erfolgen. Die dabei verwendeten Verfahren oder Protokolle können unterschiedlich ausgebildet sein, ebenso können verschiedene Frequenzbereiche zur Datenübertragung verwendet werden.

Beispielsweise können über eine solche datentechnische Verbindung Informationen über eine Modellbezeichnung des anderen Verkehrsteilnehmers übertragen werden. Auf diese Weise kann das Verkehrsteilnehmer-Objekt beispielsweise gebildet werden, indem geeignete Darstellungen in einer Datenbank verschiedener Modelle gesucht werden und dem erfassten Modell etwa eine bestimmte Darstellung zugeordnet ist.

Das darstellungsrelevante Merkmal kann ferner ein geplantes Fahrmanöver des weiteren Verkehrsteilnehmers sein, wobei die Fahrerinformationsanzeige ein Fahrmanöver-Objekt umfasst, das dem Verkehrsteilnehmer-Objekt zugeordnet ist. Der Fahrer kann dadurch vorteilhafterweise besonders leicht erkennen, mit welchen Fahrmanövern des weiteren Verkehrsteilnehmers zu rechnen ist. Das geplante Fahrmanöver betrifft insbesondere eine Richtungs- und/oder Geschwindigkeitsänderung des weiteren Verkehrsteilnehmers.

Ein geplantes Fahrmanöver des weiteren Verkehrsteilnehmers kann beispielsweise anhand eines Lichtsignals erfasst werden, etwa wenn erfasst wird, dass ein Fahrtrichtungsanzeiger des weiteren Verkehrsteilnehmers aktiviert wird. In einem solchen Fall kann bestimmt werden, dass der weitere Verkehrsteilnehmer einen Spurwechsel oder einen Abbiegevorgang plant.

Ferner kann ein geplantes Fahrmanöver mittels einer datentechnischen Verbindung erfasst werden, etwa wenn der weitere Verkehrsteilnehmer auf diesem Wege mitteilt, dass ein bestimmtes Fahrmanöver geplant ist.

Das Fahrmanöver-Objekt kann auf unterschiedliche Weisen ausgebildet sein. Es kann insbesondere ein grafisches Objekt so umfassen, dass es eine bestimmte Richtung anzeigt, die eine geplante Richtungsänderung des weiteren Verkehrsteilnehmers repräsentiert. Dies kann etwa ein Pfeil sein, der ein Richtung von der aktuellen Position des Verkehrsteilnehmer-Objekts zu einer benachbarten Fahrspur anzeigt. Das Fahrmanöver-Objekt kann ferner so gebildet sein, dass eine geplante Trajektorie des weiteren Verkehrsteilnehmers ausgegeben wird, etwa von einer aktuellen zu einer Zielposition, insbesondere relativ zum Ego-Fahrzeug. Ferner kann eine geplante Änderung der Geschwindigkeit des weiteren Verkehrsteilnehmers angezeigt werden, etwa anhand eines Pfeils entgegen der Fahrtrichtung oder durch ein Warnobjekt.

Bei einer Weiterbildung wird ein Betriebszustand des Fahrerassistenzsystems das Ego-Fahrzeugs erfasst und anhand des erfassten Betriebszustandes des Fahrerassistenzsystems wird eine Automatisierungsstufe bestimmt. Die Fahrerinformationsanzeige umfasst eine Darstellung des Umfelds des Ego-Fahrzeugs, die in Abhängigkeit von der bestimmten Automatisierungsstufe gebildet wird. Die Fahrerinformationsanzeige kann dadurch vorteilhafterweise besonders gut an die aktuelle Fahrsituationen angepasst werden.

Bei einer höheren Automatisierungsstufe wird die Fahrt des Ego-Fahrzeugs in höherem Maße durch zumindest teilweise automatische Funktionen eines Fahrerassistenzsystems unterstützt als bei einer niedrigeren Automatisierungsstufe. Beispielsweise kann bei einer ersten Automatisierungsstufe vorgesehen sein, dass lediglich entweder die Längs- oder Quersteuerung des Ego-Fahrzeugs unterstützt wird, während bei einer zweiten, höheren Automatisierungsstufe eine Unterstützung in beide Richtungen erfolgen kann.

Insbesondere wird ein Fahrspurobjekt unterschiedlich gebildet je nachdem, bei welcher Automatisierungsstufe das Umfeld dargestellt wird. Der tatsächliche Krümmungsradius einer Kurve kann insbesondere bei einer erweiterten Darstellung, das heißt bei einer höheren Automatisierungsstufe, ausgegeben werden. Dagegen kann bei einer reduzierten Darstellung vorgesehen sein, dass das Fahrspurobjekt lediglich als gerade verlaufender Abschnitt dargestellt wird, wobei beispielsweise Positionen anderer Objekte relativ zum Ego-Fahrzeug in der reduzierten Darstellung auf das Fahrspurobjekt transformiert werden.

Insbesondere wird die Fahrerinformationsanzeige mit einem Ego-Objekt so erzeugt, dass dieses in einer perspektivischen Ansicht von hinten dargestellt wird. Dabei kann zudem ein in Fahrtrichtung vor dem Ego-Fahrzeug liegender Fahrbahnabschnitt mittels des Fahrbahnobjekts dargestellt werden. Die virtuelle Blickrichtung bei der Fahrerinformationsanzeige ist also so ausgerichtet, dass ein Fahrbahnabschnitt sichtbar ist, den das Ego-Fahrzeug befahren wird. Das Fahrspurobjekt kann sich beispielsweise auf die aktuell vom Ego-Fahrzeug verwendete Fahrspur beziehen sowie alternativ oder zusätzlich einen Verlauf weiterer Fahrspuren darstellen. Das Fahrspurobjekt kann beispielsweise als Darstellung eines geraden Fahrbahnabschnitts vor dem Ego-Fahrzeug ausgebildet sein.

Zum Beispiel erfolgt je nach Automatisierungsgrad eine mehr oder weniger detaillierte Darstellung der Fahrbahn. Insbesondere wird das Fahrspurobjekt bei einer ersten Umfelddarstellung, die einer niedrigeren Automatisierungsstufe zugeordnet ist, kürzer dargestellt als bei einer höheren Automatisierungsstufe. Dagegen wird ein größerer Teil des Fahrbahnverlaufs dargestellt, wenn eine höhere Automatisierungsstufe bestimmt wurde.

Ferner kann die Umfelddarstellung bei einer höheren Automatisierungsstufe dynamisch so ausgebildet sein, dass mehr Charakteristika des aktuell vor dem Ego-Fahrzeug liegenden Fahrbahnverlaufs dargestellt werden als bei einer niedrigeren Automatisierungsstufe. Die Darstellung erfolgt insbesondere dynamisch so, dass sie stets an die aktuelle Verkehrssituation im Umfeld des Ego-Fahrzeugs angepasst wird. Die dargestellten Charakteristika des Fahrbahnverlaufs können zum Beispiel eine Krümmung, die Anordnung benachbarter Fahrspuren oder Markierungen umfassen. Diese Charakteristika können von dem Fahrspurobjekt umfasst sein, in Abhängigkeit davon, welche Automatisierungsstufe bestimmt wurde. Zum Beispiel kann ein Fahrspurobjekt einer reduzierten Darstellung lediglich eine gerade verlaufend dargestellte Fahrbahn umfassen, während die Krümmung und gegebenenfalls ein Kurvenverlauf von einer erweiterten Darstellung umfasst sind.

Beispielsweise kann bei einer höheren Automatisierungsstufe ein Fahrbahnobjekt für einen längeren Fahrbahnabschnitt dargestellt werden. Ferner können Nachbarfahrspuren dargestellt werden, wobei der Grad der Darstellung von der Automatisierungsstufe abhängt. Zum Beispiel werden benachbarte Fahrspuren nicht oder nur teilweise angezeigt, wenn eine niedrigere Automatisierungsstufe bestimmt wird, während bei einer höheren Automatisierung benachbarte Fahrspuren über ihre ganze Breite dargestellt werden.

Insbesondere wird das Verkehrsteilnehmer-Objekt nur dann dargestellt, wenn eine Automatisierungsstufe für eine erweiterte Darstellung bestimmt wurde. Das heißt, bei einer niedrigeren Automatisierungsstufe wird der weitere Verkehrsteilnehmer lediglich dann dargestellt, wenn er für einen Fahrerassistenzsystem als Regelobjekt dient. Bei höheren Automatisierungsstufen wird das Verkehrsteilnehmer-Objekt dagegen stets dargestellt, insbesondere um anzuzeigen, dass das Fahrzeug über ein vollständiges Umfeldmodell verfügt, dass die Objekte im Umfeld des Ego-Fahrzeugs umfasst.

Bei einer weiteren Ausbildung werden Umfelddaten erfasst und es wird eine Abgrenzungsmarkierung auf einem in Fahrtrichtung vor dem Ego-Fahrzeug liegenden Fahrbahnabschnitt bestimmt. Für die bestimmte Abgrenzungsmarkierung wird eine Abgrenzungsmarkierungs-Klasse bestimmt, wobei die Fahrerinformationsanzeige ein grafisches Abgrenzungsobjekt umfasst, das in Abhängigkeit von der bestimmten Abgrenzungsmarkierungs-Klasse gebildet wird. Die Fahrerinformationsanzeige erlaubt dem Fahrer dadurch vorteilhafterweise eine besonders einfache Orientierung, sodass er Anzeigeelemente direkt wahrgenommenen Elementen der Verkehrssituation zuordnen kann.

Beispielsweise werden Fahrbahnmarkierungen erfasst, einer Abgrenzungsmarkierungs-Klasse zugeordnet und entsprechend in der Fahrerinformationsanzeige als Abgrenzungsobjekt ausgegeben. Das Abgrenzungsobjekt ist insbesondere auf dem Fahrbahnobjekt angeordnet und stellt wesentliche Charakteristika der erfassten Fahrbahnmarkierungen das. So können beispielsweise durchgezogene und durchbrochene Linien, doppelte Linien sowie andere Fahrbahnmarkierungen dargestellt werden. Auch das dargestellte Abgrenzungsobjekt folgt insbesondere dem tatsächlichen Fahrbahnverlauf, zum Beispiel im Bereich einer Kurve.

Bei einer Ausbildung wird ein in Fahrtrichtung vor dem Ego-Fahrzeug liegender Fahrbahnverlauf einschließlich eines Krümmungsradius' einer Kurve detektiert. Es werden Bewegungsdaten des Ego-Fahrzeugs erfasst und anhand der erfassten Bewegungsdaten und des detektierten Krümmungsradius' wird eine Kritikalität bestimmt. Das grafische Fahrspurobjekt weist ein Hervorhebungsmerkmal auf, das in Abhängigkeit von der bestimmten Kritikalität gebildet wird. Der Fahrer kann so vorteilhafterweise schnell und leicht erfassen, ob und in welcher Weise er in die Steuerung des Ego-Fahrzeugs eingreifen muss, um eine sichere Fahrt zu gewährleisten.

Bei einer Ausbildung umfassen die Bewegungsdaten des Ego-Fahrzeugs seine aktuelle Geschwindigkeit oder eine prognostizierte Geschwindigkeit beim Einfahren in die Kurve.

Die Ausgabe kann dadurch vorteilhafterweise besonders genau an den tatsächlichen Bedarf angepasst werden.

Die aktuelle Geschwindigkeit des Ego-Fahrzeugs kann auf an sich bekannte Weise mittels Sensoren des Ego-Fahrzeugs erfasst werden. Ferner kann bestimmt werden, etwa mittels eines Fahrerassistenzsystems, welche Geschwindigkeit das Ego-Fahrzeug beim Erreichen einer bestimmten Position und insbesondere bei Einfahren in die Kurve haben wird. Wird zum Beispiel das Ego-Fahrzeug zum aktuellen Zeitpunkt bereits abgebremst, so wird bestimmt, mit welcher Geschwindigkeit das Ego-Fahrzeug voraussichtlich den Beginn der Kurve erreichen wird. Eine Bremsung kann dabei beispielsweise durch aktiven Einsatz einer Bremsvorrichtung erfolgen oder das Ego-Fahrzeug kann bereits dadurch verzögern, dass der Fahrer den Gashebel loslässt oder das Ego-Fahrzeug ausrollen lässt.

Es können ferner andere Bewegungsdaten erfasst werden, beispielsweise eine Beschleunigung in einer Richtung längs und/oder quer zur Fahrtrichtung.

Bei einer Ausbildung werden weitere Fahrzeugparameter erfasst und die Kritikalität wird ferner anhand der weiteren Fahrzeugparameter bestimmt. Indem auch Daten über die Bewegungsdaten des Ego-Fahrzeugs hinaus berücksichtigt werden, kann die Kritikalität vorteilhafterweise besonders genau bewertet werden.

Neben den Bewegungsdaten des Ego-Fahrzeugs, das heißt insbesondere der Geschwindigkeit, können auch weitere Daten erfasst werden, die das sichere Durchfahren der Kurve und insbesondere den Kraftschluss zwischen den Reifen des Ego-Fahrzeugs und der Fahrbahnoberfläche beeinflussen. Hierzu gehören beispielsweise Daten über den Typ, die Beschaffenheit, den Zustand und das Alter der Reifen des Fahrzeugs oder Fahrwerkseinstellungen.

Die bei der Ausbildung des Verfahrens bestimmte Kritikalität gibt insbesondere quantitativ an, mit welcher Dringlichkeit ein manueller Eingriff des Fahrers erforderlich ist, um eine sichere Fahrt zu gewährleisten. Beispielsweise kann es erforderlich sein, die Geschwindigkeit des Ego-Fahrzeugs manuell anzupassen und/oder ein bestimmtes Lenkmoment manuell aufzubringen. Dabei wird insbesondere ein physikalisches Modell verwendet, um zu bestimmen, ob bei einer Geschwindigkeit und dem bestimmten Krümmungsradius der Kurve Fliehkräfte auftreten, die zu einem Verlassen der Fahrspur beziehungsweise der geplanten Trajektorie führen würden. Dabei werden insbesondere zusätzliche Parameter beachtet, die sich beispielsweise auf die Kraftübertragung zwischen der Fahrbahn und dem Fahrzeug auswirken.

Zudem kann berücksichtigt werden, dass Normen und Vorschriften für Fahrerassistenzsysteme im Bereich der Quersteuerung Grenzwerte für das maximal automatisch aufzubringende Lenkmoment vorsehen. Das heißt, wenn der Radius einer Kurve und die Geschwindigkeit des Ego-Fahrzeugs dies erfordern, dann muss der Fahrer manuell ein zusätzliches Lenkmoment aufbringen, um insgesamt ein Lenkmoment über dem Schwellenwert zu erreichen. Die Kritikalität hängt daher insbesondere von dem Lenkmoment ab, das aufgebracht werden muss, um die Kurve mit der aktuellen Geschwindigkeit des Ego-Fahrzeugs sicher zu durchfahren. Dieses kann anhand eines physikalischen Modells in Abhängigkeit von dem Krümmungsradius der Kurve und der Geschwindigkeit sowie gegebenenfalls weiteren Parameter berechnet werden.

Die Kritikalität kann ferner von der Art der einzuleitenden Maßnahmen abhängen. Beispielsweise kann ein erster Wert der Kritikalität bestimmt werden, wenn eine Verzögerung des Fahrzeugs eingeleitet werden muss, um die Kurve mit einem unveränderten Grad an Unterstützung durch ein Fahrerassistenzsystem befahren zu können. Ein zweiter Wert der Kritikalität kann bestimmt werden, wenn ein Lenkeingriff erforderlich ist. Ferner kann ein dritter Wert der Kritikalität bestimmt werden, wenn sowohl eine Verzögerung als auch ein Lenkeingriff manuell erfolgen müssen, um die Kurve sicher zu durchfahren.

Das Hervorhebungsmerkmal des grafischen Fahrspurobjekts ist auf an sich bekannte Weise ausgebildet und kann eine hervorhebende Darstellung beispielsweise mittels Farbe, Helligkeit, Kontrast, Transparenz, Sättigung oder Form umfassen, wodurch die Aufmerksamkeit eines Nutzers auf ein bestimmtes Objekt gelenkt wird. Farben zur Hervorhebung, die typischerweise auch zum Ausgeben von Warnungen verwendet werden, können etwa Rot, Gelb und Grün sein. Im Unterschied dazu können bestimmte farbliche Darstellungen eine geringere Hervorhebung bewirken, etwa bei einer grauen, dunklen oder weniger stark gesättigten Farbgebung. Ferner kann eine Hervorhebung mittels einer zeitlich veränderlichen Darstellung des Fahrspurobjekts erfolgen, insbesondere durch eine periodische Veränderung der Darstellung, etwa durch Blinken oder Pulsieren, oder durch plötzliches Auftauchen oder Verschwinden. Eine zeitliche Veränderung der Darstellung kann sich auch auf eine Formgebung oder eine einmalige oder periodisch dargestellte Größenänderung des dargestellten grafischen Objekts beziehen. Das Hervorhebungsmerkmal kann auch als weiteres grafisches Objekt ausgebildet sein, etwa ein Rahmen oder eine Umrandung des Fahrspurobjekts.

Die Ausprägung des Hervorhebungsmerkmals hängt von der bestimmten Kritikalität ab. Beispielsweise kann bei einer niedrigeren Kritikalität das Hervorhebungsmerkmal so ausgebildet sein, dass es eine schwache Hervorhebung bewirkt, etwa eine Darstellung des Fahrspurobjekts ohne eine Umrandung, oder eine farbige Gestaltung, die umgebenden grafischen Objekten etwa in Helligkeit, Farbe und Kontrast ähnlich ausgebildet ist. Bei einer höheren Kritikalität kann eine Umrandung oder ein zusätzlich hervorhebendes Objekt angezeigt werden oder die Darstellung des Fahrspurobjekts kann zur Hervorhebung abweichend von umgebenden grafischen Objekten erfolgen, etwa durch eine kontrastreiche Darstellung in Helligkeit und/oder Farbe oder durch die Verwendung einer Signalfarbe wie Gelb oder Rot.

Bei einer weiteren Ausbildung werden ferner Fahrbahnoberflächeneigenschaften erfasst und die Kritikalität wird ferner anhand der erfassten Fahrbahnoberflächeneigenschaften bestimmt. Dadurch kann die Kritikalität nicht nur anhand geometrischer Merkmale der Fahrbahn, sondern auch anhand weiterer relevanter Merkmale der Fahrbahnoberfläche zuverlässiger bestimmt werden.

Die Fahrbahnoberflächeneigenschaften betreffen insbesondere für die Kraftübertragung zwischen dem Fahrzeug und der Fahrbahnoberfläche relevante Parameter. Beispielsweise können Nässe, Schnee, Eis, Öl oder andere Verschmutzungen auf der Fahrbahn dazu führen, dass der Kraftschluss zwischen Reifen und Fahrbahnoberfläche verschlechtert wird und eine Kurve mit geringerer Geschwindigkeit durchfahren werden muss. Ferner kann die Art des Fahrbahnbelags eine in diesem Zusammenhang relevante Information darstellen.

Die Fahrbahnoberflächeneigenschaften werden auf an sich bekannte Weise erfasst. Beispielsweise können Sensoren des Ego-Fahrzeugs verwendet werden, etwa eine Kamera, ein Regensensor oder eine Sensorik zur Messung des Kraftschlusses zwischen Reifen und Fahrbahnoberfläche oder des an dieser Oberfläche auftretenden Radschlupfs. Alternativ oder zusätzlich können Nutzereingaben oder Daten einer externen Einrichtung erfasst werden, etwa Wetterdaten für die Position des Ego-Fahrzeugs beziehungsweise die Position der Kurve. Hierzu können insbesondere Daten über eine *Car2lnfrastructure-, Car2X-* oder *Car2Car-*Kommunikation empfangen werden, wobei eine Verkehrsinfrastruktur, eine externe Einheit und/oder ein anderes Fahrzeug Daten über die Fahrbahnoberflächeneigenschaften erfasst und dem Ego-Fahrzeug bereitstellt.

Das erfindungsgemäße Fahrerinformationssystem in einem Ego-Fahrzeug umfasst eine Erfassungseinheit, die dazu eingerichtet ist, einen weiteren Verkehrsteilnehmer in einem vor dem Ego-Fahrzeug liegenden Fahrbahnbereich zu erfassen. Es umfasst ferner einen Fahrerassistenzsystem für eine zumindest teilweise automatische Quersteuerung des Ego-Fahrzeugs, das dazu eingerichtet ist, in Abhängigkeit von dem weiteren Verkehrsteilnehmer eine Soll-Trajektorie des Ego-Fahrzeugs zu erzeugen, sowie eine Steuereinheit, die dazu eingerichtet ist, eine Fahrerinformationsanzeige zu erzeugen und auszugeben. Dabei umfasst die Fahrerinformationsanzeige ein grafisches Verkehrsteilnehmer-Objekt, das den weiteren Verkehrsteilnehmer repräsentiert. Ferner umfasst die Fahrerinformationsanzeige ferner ein Trajektorien-Objekt, welches die Soll-Trajektorie des Ego-Fahrzeugs repräsentiert. Es ist ferner ein darstellungsrelevantes Merkmal des weiteren Verkehrsteilnehmers erfassbar; und das dem weiteren Verkehrsteilnehmer zugeordnete Verkehrsteilnehmer-Objekt ist in Abhängigkeit von dem darstellungsrelevanten Merkmal ausgebildet. Erfindungsgemäß betrifft das darstellungsrelevante Merkmal einen Zustand einer Beleuchtungsanlage des weiteren Verkehrsteilnehmers.

Das erfindungsgemäße Fahrerinformationssystem ist insbesondere ausgebildet, das vorstehend beschriebene erfindungsgemäße Verfahren zu implementieren. Das Fahrerinformationssystem weist somit dieselben Vorteile auf wie das erfindungsgemäße Verfahren.

Bei einer Ausbildung des erfindungsgemäßen Fahrerinformationssystems umfasst die Anzeigeeinheit eine Blickfeldanzeige zum Ausgeben der Fahrerinformationsanzeige. Die Anzeige kann so vorteilhafterweise besonders leicht vom Fahrer erfasst werden. Sie kann ferner besonders gut in Bezug zur physischen Umgebung des Ego-Fahrzeugs gesetzt werden.

Insbesondere kann ein *Head-up*-Display oder eine an sich bekannte Anzeigeeinrichtung aus dem Bereich der sogenannten "erweiterten Realität" (englisch: *augmented reality*) verwendet werden. Beispielsweise sind Brillen bekannt, die eine grafische Darstellung so ins Auge eines Nutzers projizieren, dass die grafische Darstellung der natürlichen Wahrnehmung des Auges überlagert erscheint. Auf diese Weise können Zusatzinformationen besonders leicht erfassbar ausgegeben werden.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Fahrerinformationssystems,
- Figur 2: zeigt eine Verkehrssituation mit Fahrzeugen auf einer Fahrbahn,
- Figur 3: zeigt ein Ausführungsbeispiel einer anhand des Verfahrens erzeugten Fahrerinformationsanzeige bei einer Kurvenfahrt,
- Figuren 4A bis 4C: zeigen weitere Ausführungsbeispiele von anhand des Verfahrens erzeugten Fahrerinformationsanzeigen unter Berücksichtigung von Wetterdaten,
- Figuren 5A bis 5D: zeigen weitere Ausführungsbeispiele von anhand des Verfahrens erzeugten Fahrerinformationsanzeigen unter Berücksichtigung verschiedener Arten von Fahrbahnmarkierungen,
- Figuren 6A bis 6C: zeigen weitere Ausführungsbeispiele von anhand des Verfahrens erzeugten Fahrerinformationsanzeigen für einen geplanten Spurwechsel,
- Figuren 7A bis 7C: zeigen weitere Ausführungsbeispiele von anhand des Verfahrens erzeugten Fahrerinformationsanzeigen unter Berücksichtigung gegebenenfalls drohenden Gegenverkehrs,
- Figuren 8A bis C: zeigen verschiedene Darstellungen des Ego-Objekts in der Fahrerinformationsanzeige, die bei dem Verfahren erzeugt und ausgegeben werden können,
- Figur 9: zeigt ein Ausführungsbeispiel einer anhand des Verfahrens erzeugten Fahrerinformationsanzeige mit einem Anhänger-Objekt,
- Figuren 10A und 10B: zeigen Ausführungsbeispiele von Fahrerinformationsanzeigen für verschiedene Automatisierungsstufen,
- Figuren 11A bis 11C: zeigen Ausführungsbeispiele von Fahrerinformationsanzeigen mit unklassifizierten und klassifizierten anderen Verkehrsteilnehmern,
- Figuren 12A und 12B: zeigen Ausführungsbeispiele von Fahrerinformationsanzeigen während einer Folgefahrt des Ego-Fahrzeugs und
- Figuren 13A bis 13D: zeigen Ausführungsbeispiele von Fahrerinformationsanzeigen beim Einstellen einer Regeldistanz.

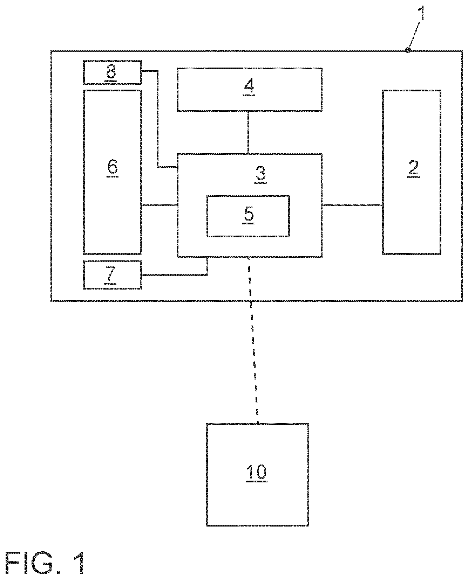

Mit Bezug zu Figur 1 wird ein Fahrzeug mit einem Ausführungsbeispiel des erfindungsgemäßen Fahrerinformationssystems erläutert.

Ein Ego-Fahrzeug 1 umfasst eine Erfassungseinheit 2, die mit einer Steuereinheit 3 gekoppelt ist. Es umfasst ferner eine Anzeigeeinheit 4 und ein Fahrerassistenzsystem 6, die ebenfalls mit der Steuereinheit 3 gekoppelt sind. Die Steuereinheit 3 umfasst bei dem Ausführungsbeispiel eine Auswertungseinheit 5 und ist datentechnisch drahtlos mit einer externen Einheit 10, bei dem Ausführungsbeispiel ein externer Server 10, gekoppelt. Das Ego-Fahrzeug 1 umfasst ferner eine Beleuchtungseinrichtung 7 sowie eine Anhängevorrichtung 8, die ebenfalls mit der Steuereinheit 3 gekoppelt sind.

Die Erfassungseinheit 2 ist bei dem Ausführungsbeispiel auf an sich bekannte Weise ausgebildet und umfasst eine Kamera, die Bilddaten in einem Erfassungsbereich erfasst, der sich von dem Ego-Fahrzeug 1 aus mit einem bestimmten Winkel in Fahrtrichtung nach vorne erstreckt. Sie umfasst ferner vordere, seitliche und hintere Radarsensoren, die Daten in weiteren Erfassungsbereichen um das Ego-Fahrzeug 1 herum erfassen.

Die Anzeigeeinheit 4 ist ebenfalls auf an sich bekannte Weise ausgebildet und bei dem Ausführungsbeispiel als Display in ein Kombiinstrument des Ego-Fahrzeugs 1 integriert. Bei weiteren Ausführungsbeispielen umfasst die Anzeigeeinheit 4 ein Head-up-Display, das so eingerichtet ist, dass eine Anzeige so in das Blickfeld eines Fahrers des Ego-Fahrzeugs 1 projiziert wird, dass die Anzeige der natürlichen Wahrnehmung des Fahrers überlagert wird. Bei weiteren Ausführungsbeispielen sind ferner weitere Einrichtungen zur Ausgabe von Anzeigen vorgesehen, wie sie beispielsweise aus dem Bereich der erweiterten Realität bekannt sind. Alternativ oder zusätzlich kann die Anzeigeeinheit 4 ein Mitteldisplay im Bereich einer Mittelkonsole des Ego-Fahrzeugs 1 oder ein anderes Display im Ego-Fahrzeug 1 umfassen. Zudem kann die Anzeigeeinheit 4 mehrere Displays umfassen.

Das Fahrerassistenzsystem 6 umfasst mehrere Fahrerassistenzmodule, durch die der Fahrer des Ego-Fahrzeugs 1 auf unterschiedliche Weise beim Steuern des Ego-Fahrzeugs 1 unterstützt wird. Diese sind bei dem Ausführungsbeispiel nicht näher spezifiziert. Vorgesehen sind etwa Systeme zur Unterstützung der Längssteuerung, insbesondere ein Assistent zum Halten eines vorgegebenen Abstands zu einem vorausfahrenden Fahrzeug sowie zum Halten einer vorgegebenen Geschwindigkeit, sowie zur Unterstützung der Quersteuerung, insbesondere ein Assistent zum Halten einer befahrenen Fahrspur, etwa anhand von Fahrbahnmarkierungen oder durch eine Folgefahrt hinter einem vorausfahrenden Fahrzeug. Durch das Fahrerassistenzsystem 6 können Ausgaben erzeugt und beispielsweise mittels der Anzeigeeinheit 4 ausgegeben werden, insbesondere um dem Fahrer Warnhinweise oder empfohlene Fahrmanöver anzuzeigen. Ferner können verschiedene Fahrerassistenzmodule aktiv in Steuerungsvorrichtungen des Ego-Fahrzeugs 1 eingreifen.

Die Beleuchtungseinrichtung 7 umfasst verschiedene Einrichtungen, die einer von außerhalb des Ego-Fahrzeugs 1 erfassbaren Beleuchtung dienen. Bei dem Ausführungsbeispielen sind Scheinwerfer zum Erzeugen eines Tagfahrlichts, eines Abblendlichts, eines Fernlichts und eines Standlichts umfasst. Ferner sind Fahrtrichtungsanzeiger sowie

Seitenmarkierungsleuchten und weitere Signalleuchten umfasst. Es sind ferner Schlussleuchten, Bremsleuchten, Rückstrahler, Nebelschlussleuchten und Rückfahrscheinwerfer umfasst, die insbesondere am Heck des Ego-Fahrzeugs 1 so angeordnet sind, dass sie für den von hinten ankommenden Verkehr sichtbar sind.

Die Anhängevorrichtung 8 ist auf an sich bekannte Weise ausgebildet und umfasst Elemente, die zur Koppelung mit einer angehängten Vorrichtung geeignet sind. Dies kann insbesondere ein Anhänger sein. Hierzu sind auch elektrische Anschlüsse vorgesehen, durch die beispielsweise eine Beleuchtungsanlage eines Anhängers angesteuert werden kann. Die Anhängevorrichtung umfasst bei dem Ausführungsbeispiel ferner Sensoren, die eine aufliegende Masse sowie gegebenenfalls eine Zugkraft eines Anhängers detektieren, beispielsweise um das Vorhandensein eines Anhängers sowie gegebenenfalls seinen Typ zu bestimmen.

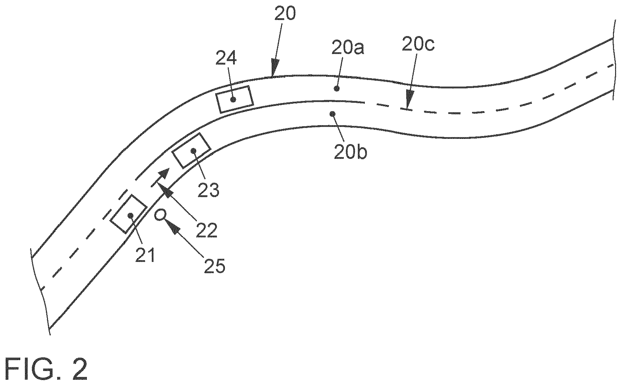

Mit Bezug zu Figur 2 wird ein Ausführungsbeispiel des Verfahrens erläutert. Dabei wird von dem oben mit Bezug zu Figur 1 erläuterten Ego-Fahrzeug mit einem Ausführungsbeispiel des erfindungsgemäßen Fahrerinformationssystems ausgegangen, welches durch die Beschreibung des Verfahrens weiter spezifiziert wird.

Ein Ego-Fahrzeug 21, das bei dem Ausführungsbeispiel dem in Figur 1 gezeigten Ego-Fahrzeug 1 entspricht, fährt in einer durch einen Pfeil 22 dargestellten Fahrtrichtung auf einer Fahrbahn 20, die zwei Fahrspuren 20a, 20b aufweist. Im Bereich der Fahrbahn 20 ist ein Verkehrsschild 25 angeordnet. Auf der gleichen Fahrspur 20b wie das Ego-Fahrzeug 21 befindet sich ein vorausfahrendes Fahrzeug 23, während sich auf der benachbarten Fahrspur 20a ein entgegenkommendes Fahrzeug 24 befindet. Die Fahrbahn 20 weist einen Fahrbahnverlauf mit Kurven auf, wobei sich bei dem in Figur 2 gezeigten Ausführungsbeispiel das Ego-Fahrzeug 1 auf eine Rechtskurve zubewegt, an die sich eine Linkskurve anschließt.

Das Ego-Fahrzeug 21 erfasst mittels der Erfassungseinheit 2 den in Fahrtrichtung vor ihm liegenden Fahrbahnverlauf. Bei dem Ausführungsbeispiel werden hierzu mittels der von der Erfassungseinheit 2 umfassten Kamera Bilddaten erfasst und in einem weiteren Schritt ausgewertet, um den Fahrbahnverlauf zu bestimmen. Hierzu wird insbesondere die geometrische Konfiguration der Fahrbahn 20 beziehungsweise der aktuell vom Ego-Fahrzeug 1 befahrenen Fahrspur 20b bestimmt. Bei weiteren Ausführungsbeispielen sind alternativ oder zusätzlich andere Sensoren des Ego-Fahrzeugs 1 zur Erfassung vorgesehen.

Anhand der von der Erfassungseinheit 2 erfassten Daten werden auch die Fahrbahnmarkierungen, welche die beiden Fahrspuren 20a, 20b voneinander trennen, erfasst. Zudem werden weitere, in Figur 2 nicht dargestellte Fahrbahnmarkierungen an den Rändern der Fahrbahn 20 erfasst. Für die Fahrbahnmarkierungen werden Abgrenzungsmarkierungs-Klassen bestimmt, im vorliegenden Fall "gestrichelte Linie" und "durchgezogene Linie" für verschiedene Bereiche der Mittellinie zwischen den Fahrspuren 20a, 20b und "durchgezogene Linie" für die Randmarkierungen der Fahrbahn 20. Bei weiteren Ausführungsbeispielen kann auch eine Fahrbahnmarkierung der Abgrenzungsmarkierungs-Klasse "doppelte durchgezogene Linie", "parallele gestrichelte und durchgezogene Linie" oder eine ähnliche Konfiguration bestimmt werden. Auch ein Bordstein oder in Übergang von der Fahrbahn 20 zu einem daneben angeordneten Bankett kann als Abgrenzungsmarkierung erfasst und entsprechend klassifiziert werden.

Zusätzlich wird bei dem Ausführungsbeispiel die aktuelle Position des Ego-Fahrzeug 1 erfasst und anhand dieser Position werden Kartendaten bereitgestellt, die Informationen über den Fahrbahnverlauf umfassen. Es wird eine Fusion der Kartendaten sowie der erfassten Sensordaten durchgeführt und hieraus wird der tatsächlich in Fahrtrichtung vor dem Ego-Fahrzeug 1 liegenden Fahrbahnverlauf bestimmt.

Das Ego-Fahrzeug 21 erfasst mittels der Erfassungseinheit 2 zudem Wetterdaten. Bei dem Ausführungsbeispiel wird hierzu ein Regensensor verwendet sowie die Kamera. Bei weiteren Ausführungsbeispielen werden alternativ oder zusätzlich anhand der bestimmten Position des Ego-Fahrzeugs 21 relevante Wetterdaten von einer externen Einheit 10 abgerufen. Ferner können von einer Infrastruktur oder beispielsweise über Radiosender bereitgestellte Daten über das Wetter an der Position des Ego-Fahrzeugs 21 erfasst werden.

Die erfassten Wetterdaten umfassen Informationen über Regen und Schnee sowohl zum aktuellen Zeitpunkt als auch in der jüngeren Vergangenheit. Hieraus wird darauf geschlossen, ob der vor dem Ego-Fahrzeug 21 liegende Fahrbahnabschnitt nass ist oder Schneeglätte aufweist. Ferner betreffen die Wetterdaten die Gefahr einer Eisglätte. Insbesondere wird hierzu die aktuelle Temperatur der Luft oder der Fahrbahnoberfläche berücksichtigt; wenn die Temperatur unter dem Gefrierpunkt oder einem anderen Schwellenwert liegt, wird von einer vereisten Fahrbahn ausgegangen. Andere Arten von Niederschlag, etwa Hagel oder Graupel, werden ebenfalls berücksichtigt.

Ferner erfasst die Erfassungseinheit Bewegungsdaten des Ego-Fahrzeug 21, insbesondere seine aktuelle Geschwindigkeit und Beschleunigung. Bei weiteren Ausführungsbeispielen werden auch eine Geschwindigkeit und Beschleunigung des Ego-Fahrzeugs zu einem späteren Zeitpunkt prognostiziert, insbesondere für einen prognostizierten Zeitpunkt des Eintritts des Ego-Fahrzeugs 21 in eine Kurve. Bei weiteren Ausführungsbeispielen werden ferner weitere Daten über das Ego-Fahrzeug 21 erfasst, insbesondere über die Beschaffenheit seiner Reifen und Einstellungen seines Fahrwerks, die sich auf das Verhalten des Ego-Fahrzeugs bei einer Kurvenfahrt auswirken.

Die Auswertungseinheit 5 bestimmt auf der Grundlage des erfassten Fahrbahnverlaufs den Krümmungsradius der vor dem Ego-Fahrzeug 21 liegenden Kurve. Bei weiteren Ausführungsbeispielen können auch die Krümmungsradien weiterer Kurven bestimmt werden, insbesondere um eine weiter vorausschauende Fahrweise zu ermöglichen. Anschließend werden die Informationen über die Geschwindigkeit des Ego-Fahrzeugs 21 und den Krümmungsradius der vor dem Ego-Fahrzeug 21 liegenden Kurve verwendet, um einen Wert einer Kritikalität zu bestimmen.

Zum Bestimmen der Kritikalität wird das zum Durchfahren der Kurve bei der aktuellen oder prognostizierten Geschwindigkeit notwendige Lenkmoment für das Ego-Fahrzeug 21 bestimmt, insbesondere durch das Fahrerassistenzsystem 6. Das bestimmte Lenkmoment wird mit einem Schwellenwert verglichen, der bei dem Fahrerassistenzsystem 6 für ein maximales Lenkmoment zur automatischen Unterstützung beim Halten der Fahrspur 20b definiert ist. Wird dieser Schwellenwert überschritten, so kann das Fahrerassistenzsystem 6 nicht mit einem genügend großen Lenkmoment automatisch unterstützend eingreifen, um dem Ego-Fahrzeug 21 eine sicheres Durchfahren der Kurve zu ermöglichen. Das heißt, der Fahrer des Ego-Fahrzeugs 21 muss durch Aufbringen eines zusätzlichen Lenkmoment in die Steuerung des Ego-Fahrzeugs 21 eingreifen und/oder durch Verzögern des Ego-Fahrzeug 21 die Geschwindigkeit verringern.

Bei weiteren Ausführungsbeispielen wird alternativ oder zusätzlich bestimmt, ob das Ego-Fahrzeug 1 bei der erfassten oder prognostizierten Geschwindigkeit die Kurve physikalisch sicher durchfahren kann. Wenn bestimmt wird, dass dies nicht möglich oder mit Risiken verbunden ist, wird dies als höhere Kritikalität definiert. Dabei wird insbesondere die physikalische mögliche Kraftübertragung zwischen den Reifen des Ego-Fahrzeugs 1 und der Fahrbahnoberfläche berücksichtigt. Bei einer höheren Kritikalität ist beispielsweise ein Abbremsen des Ego-Fahrzeugs 1 oder eine Wahl eines größeren Kurvenradius' erforderlich.

Bei dem Ausführungsbeispiel können verschiedene Fahrerassistenzmodule des Fahrerassistenzsystems 6 aktiviert werden, wobei auch verschiedene Grade der Automatisierung erreicht werden. Der Fahrer kann beispielsweise eine niedrige Automatisierungsstufe wählen, bei der die Längs- und Quersteuerung des Ego-Fahrzeugs 1 im Wesentlichen manuell erfolgt. Er kann Module hinzuschalten, die Warnungen oder Empfehlungen für die Steuerung ausgeben; dies entspricht einer niedrigen Automatisierungsstufe. Des Weiteren kann er Module aktivieren, die einzelne Aufgaben der Längs- und Quersteuerung übernehmen; dies entspricht einer höheren Automatisierungsstufe. Ferner kann der Fahrer Fahrerassistenzmodule aktivieren, welche sowohl die Längssteuerung als auch die Quersteuerung automatisch unterstützen; dies entspricht einer noch höheren Automatisierungsstufen. Der Schwellenwert für das Lenkmoment, welches ein Fahrerassistenzmodul zur Quersteuerung aufbringen kann, kann von dem konkreten Modul oder dem Fahrerassistenzsystem 6 abhängen.

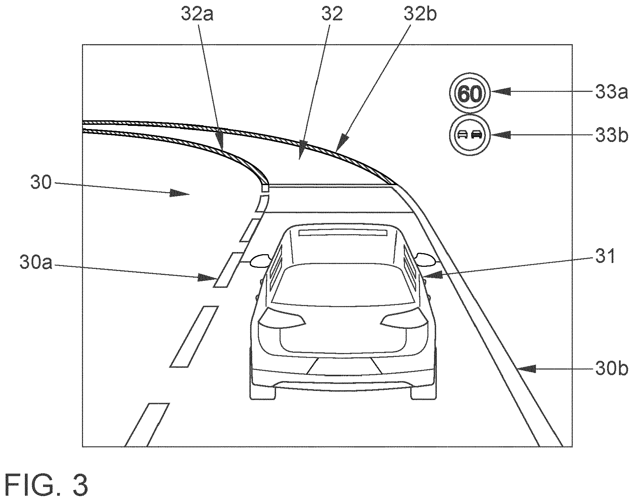

Während der Fahrt erzeugt die Steuereinheit 3 eine Fahrerinformationsanzeige, die durch die Anzeigeeinheit 4 ausgegeben wird. Ein Ausführungsbeispiel einer solchen Anzeige ist beispielhaft in Figur 3 gezeigt.

Die Fahrerinformationsanzeige umfasst ein Ego-Objekt 31, das als perspektivische Ansicht des Ego-Fahrzeugs 21 von hinten aus einer leicht erhöhten virtuellen Position so ausgebildet ist, dass ein vor dem Ego-Fahrzeug 21 liegender Bereich ebenfalls darstellbar ist. Die Anzeige umfasst ferner ein Fahrspurobjekt 30, das so angeordnet ist, dass das Ego-Objekt 31 darauf angezeigt wird. Das Fahrspurobjekt 30 repräsentiert die aktuell tatsächlich vom Ego-Fahrzeug 21 befahrene Fahrspur 20b auf der Fahrbahn 20.

In weiteren Ausführungsbeispielen werden für weitere und insbesondere benachbarte Fahrspuren weitere grafische Objekte angezeigt, welche beispielsweise analog zu dem gezeigten Fahrspurobjekt 30 ausgebildet sind.

Bei dem Ausführungsbeispiel wird das Fahrspurobjekt 30 durch eine gestrichelte linke 30a und eine durchgezogene rechte Fahrbahnmarkierung 30b begrenzt. Die dargestellten Markierungstypen entsprechen den tatsächlich auf der Fahrspur 20a vorhandenen Markierungen gemäß den zuvor bestimmten Abgrenzungsmarkierungs-Klassen. Bei weiteren Ausführungsbeispielen können die Fahrbahnmarkierungen anhand anderer Kriterien gebildet werden, etwa um zu symbolisieren, ob ein Fahrspurwechsel in Richtung einer Fahrbahnmarkierung erlaubt und möglich ist.

Das Fahrspurobjekt 30 repräsentiert den erfassten Verlauf der physischen Fahrspur 20b, auf der sich das Ego-Fahrzeug 21 aktuell befindet. Eine vor dem Ego-Fahrzeug 21 befindliche Kurve wird durch einen Kurvenbereich 32 des Fahrspurobjekts 30 repräsentiert. Dieser ist in seiner geometrischen Form so gebildet, dass er den tatsächlichen Krümmungsradius der Kurve in der perspektivischen Darstellung wiedergibt.

Das Fahrspurobjekt 30 wird mit dem Kurvenbereich 32 in Abhängigkeit von der für die Kurve bestimmten Kritikalität gebildet. Bei dem Ausführungsbeispiel sind die Fahrbahnmarkierungen 32a, 32b, welche die dargestellte Fahrspur im Kurvenbereich 32 seitlich begrenzen, so ausgebildet, dass der Fahrer auf einen notwendigen manuellen Eingriff hingewiesen wird. Dies erfolgt hier durch Darstellung in einer bestimmten Farbe, etwa rot, wenn der Wert der bestimmten Kritikalität einen Schwellenwert überschreitet. Bei dem Ausführungsbeispiel werden die Fahrbahnmarkierungen 32a, 32b im Kurvenbereich 32 dann nicht mehr so gebildet, dass sie die tatsächlichen Markierungen auf der Fahrspur 20b wiedergeben, sondern sie werden durchgezogen dargestellt, um den Fahrer auf ihre Bedeutung in der Kurve hinzuweisen.

Bei weiteren Ausführungsbeispielen weist das Fahrspurobjekt 30 andere Hervorhebungsmerkmale als die Farbe der Fahrbahnmarkierungen 32a, 32b im Kurvenbereich 32 auf, etwa eine Farbe der Oberfläche der dargestellten Fahrspur 32, sodass die Hervorhebung großflächig erfolgt. Bei weiteren Ausführungsbeispielen können je nach dem Wert der Kritikalität andere Darstellungen erzeugt werden, etwa mit anderen Farben, die anhand des Kritikalitätswerts und einer Skala bestimmt werden. Ferner können dynamische Darstellungen erzeugt werden, etwa mit blinkenden Objekten.

Bei dem Ausführungsbeispiel umfasst die Fahrerinformationsanzeige ferner Darstellungen von Verkehrsschildern 33a, 33b, die eine Geschwindigkeitsbegrenzung und ein Überholverbot im Bereich der Kurve signalisieren. Diese Verkehrsschilder 33a, 33b können auch im Bereich des Fahrspurobjekts 30 so angezeigt werden, dass sie auf seiner Oberfläche erscheinen, oder sie können wie tatsächliche Verkehrsschilder 25 am Rand des Fahrspurobjekts 30 angezeigt werden. Die Verkehrsschilder 33a, 33b entsprechen bei dem Ausführungsbeispiel einem tatsächlich am Rand der Fahrbahn 20 angeordneten Verkehrsschild 25, bei weiteren Ausführungsbeispielen können jedoch auch Verkehrsschilder anhand von Fahrempfehlungen des Fahrerassistenzsystems 6 gebildet werden, etwa wenn eine bestimmte Höchstgeschwindigkeit für das sichere Durchfahren einer Kurve bestimmt wurde oder wenn der Bereich der Kurve als nicht sicher zum Überholen bewertet wird.

Bei weiteren Ausführungsbeispielen können in Abhängigkeit von der Kritikalität ferner akustisch und/oder haptisch erfassbare Warnmeldungen ausgegeben werden. Ferner können zusätzlich andere optische Warnmeldungen angezeigt werden, etwa mittels eines Warnsymbols.

Bei einem weiteren Ausführungsbeispiel ist das Fahrerassistenzsystem 6 dazu eingerichtet, zu bestimmen, ob beim Eintritt in die Kurve eine Geschwindigkeit erreicht wird, die ein sicheres Durchfahren der Kurve erlaubt. Wenn der Fahrer trotz der Hervorhebung des Kurvenabschnitts 32 der Fahrerinformationsanzeige keine geeigneten Maßnahmen einleitet, können automatisch Sicherheitsmaßnahmen eingeleitet werden, um das Ego-Fahrzeug 1, 21 in einen sicheren Zustand zu bringen. So kann etwa eine Bremsung durchgeführt werden, die das Ego-Fahrzeug 1, 21 auf eine sichere Geschwindigkeit bringt.

Bei dem Ausführungsbeispiel ist ferner vorgesehen, dass die grafische Darstellung des Ego-Fahrzeugs 31 in der Fahrerinformationsanzeige an einer festen Position angeordnet ist. Die Darstellung entspricht daher einer Perspektive von einem relativ zum Ego-Fahrzeug 21 festen Punkt, insbesondere von einer Position des Fahrers oder einer oberhalb des Ego-Fahrzeugs 21 angeordneten Position. Die Darstellung wird so erzeugt, dass bei der Fahrt eine Bewegung so dargestellt wird, dass sich andere Objekte, welche die Umgebung des Ego-Fahrzeugs 21 präsentieren, relativ zu dem dargestellten Ego-Objekt 31 bewegen. Beispielsweise dargestellt, dass sich die Fahrbahnmarkierungen 30A, 30B relativ zum Ego-Objekt 31 bewegen und dass sich auch die Anordnung des Fahrspurobjektes 30 relativ zum Ego-Objekt 31 verändert. Beispielsweise verändert sich das Fahrspurobjekt 30 während des Durchfahrens der Kurve so, dass seine Krümmung veränderlich dargestellt wird und das Fahrspurobjekt 30 etwa am Ausgang das kurvigen Bereichs wieder vollständig gerade beziehungsweise mit einem veränderten, erfassten Krümmungsradius verläuft.

Bei einem weiteren Ausführungsbeispiel werden andere Verkehrsteilnehmer erfasst und als Verkehrsteilnehmer-Objekte in der Fahrerinformationsanzeige ausgegeben. Die Verkehrsteilnehmer-Objekte werden relativ zum Ego-Objekt 31so angezeigt, dass die physische Position und Geschwindigkeit der zugeordneten Verkehrsteilnehmer aus der Anzeige entnehmbar ist. Die Verkehrsteilnehmer-Objekte werden dabei auch entsprechend dem Fahrbahnverlauf gedreht dargestellt, sodass sie beispielsweise von schräg seitlich sichtbar sind, wenn sie einen Bereich der Fahrbahn befahren, der gegenüber der Ausrichtung des Ego-Fahrzeugs 21 gekrümmt ist.

Bei einem weiteren Ausführungsbeispiel umfasst die Anzeigeeinheit 4 ein Head-up-Display und zumindest das Fahrspurobjekt 30 der Fahrerinformationsanzeige wird auf diese Weise angezeigt. Es kann insbesondere so angezeigt werden, dass es den tatsächlich von der Position des Fahrers aus wahrgenommenen Fahrspur 20b überlagert erscheint. Der Kurvenbereich 32 wird dann so hervorgehoben, dass der Fahrer die Kritikalität im vor ihm liegenden Bereich bewerten und erkennen kann, dass eine manuelle Verringerung der Geschwindigkeit oder ein zusätzliches Aufbringen eines Lenkmoments zum sicheren Durchfahren der Kurve notwendig ist.

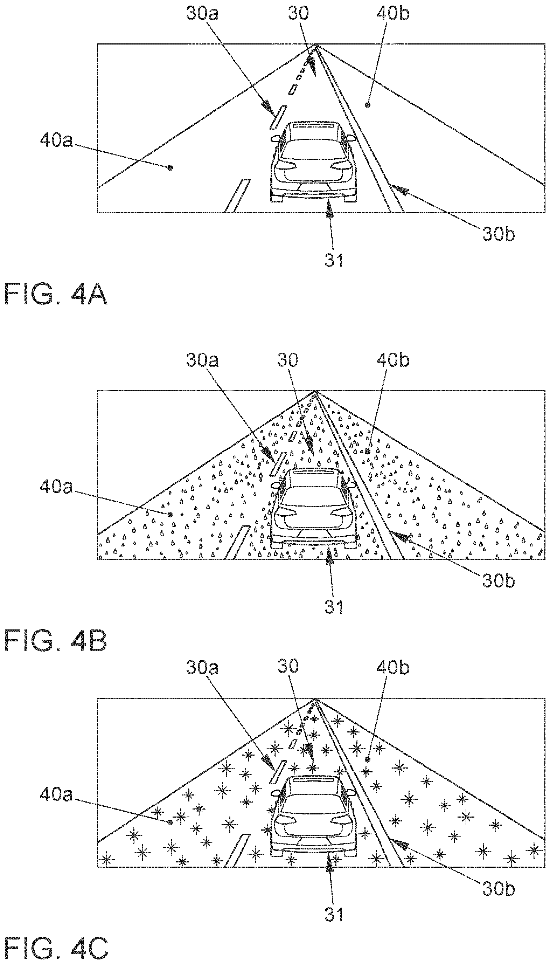

Ein weiteres Ausführungsbeispiel einer Fahrerinformationsanzeige, die bei dem Verfahren unter Berücksichtigung von Wetterdaten gebildet und ausgegeben wird, wird nachfolgend mit Bezug zu den Figuren 4A, 4B und 4C erläutert. Die Anzeige ähnelt der oben mit Bezug zu Figur 3 erläuterten Anzeige. Es werden daher lediglich zusätzliche Merkmale erläutert. Vergleichbare Objekte werden mit den gleichen Bezugszeichen bezeichnet.

Bei diesem Ausführungsbeispiel umfasst die Fahrerinformationsanzeige ferner grafische Elemente 40a, 40b für benachbarte Fahrspuren. Diese sind seitlich neben dem Fahrspurobjekt 30, auf dem das Ego-Objekt 31 angeordnet ist, positioniert und setzen die Fahrbahn perspektivisch dargestellt zur Seite hin fort. Bei dem Ausführungsbeispiel werden lediglich Fahrbahnmarkierungen 30a, 30b an den Rändern des Fahrspurobjekts 30 für die fahrzeugeigene Fahrspur 20b angezeigt. Die dargestellten Markierungstypen entsprechen auch hier den tatsächlich auf der Fahrbahn 20 vorhandenen Markierungen gemäß den zuvor bestimmten Abgrenzungsmarkierungs-Klassen.

Bei dem in Figur 4A gezeigten Fall wurde detektiert, dass die Oberfläche der Fahrbahn trocken ist. Die Fahrobjekte 30, 40a, 40b werden ohne Strukturierung dargestellt, beispielsweise einheitlich schwarz oder grau.

Bei dem in Figur 4B gezeigten Fall wurde detektiert, dass die Oberfläche der Fahrbahn nass ist. Die grafischen Objekte zur Darstellung der eigenen Fahrspur 30 sowie der links 30a und rechts 30b benachbarten Fahrspuren werden mit einem Muster dargestellt, das in dem Beispiel Regentropfen darstellt. Bei anderen Ausführungsbeispielen können andere Strukturierungen dargestellt werden, ferner sind auch dynamische Darstellungen, etwa sich bewegende Strukturen im Bereich der grafischen Objekte 30, 40a, 40b denkbar. Einem weiteren Ausführungsbeispiel werden zudem andere Objekte dargestellt, etwa weitere Verkehrsteilnehmer, deren Spiegelbilder auf der als Regen nass dargestellten Fahrbahn dargestellt werden. Ferner kann Gischt im Bereich von Verkehrsteilnehmer-Objekten dargestellt werden, die sich über die Fahrbahn bewegen.

Bei dem in Figur 4C gezeigten Fall wurde detektiert, dass die Fahrbahn zumindest teilweise mit Schnee bedeckt ist. Analog zu dem in Figur 4B gezeigten Fall werden auch hier die Objekte für die Fahrspuren 30, 30a, 30b strukturiert dargestellt, wobei ein Muster einer Schneeoberfläche gezeigt wird. Auch hier sind andere Strukturierungen sowie dynamische Darstellungen denkbar.

Bei weiteren Ausführungsbeispielen werden die grafischen Objekte für die Fahrspuren 30, 40a, 40b so dargestellt, dass andere Merkmale ihrer Oberfläche repräsentiert werden. Dies können beispielsweise Verschmutzungen, Öl oder Markierungen auf der Fahrbahn sein.

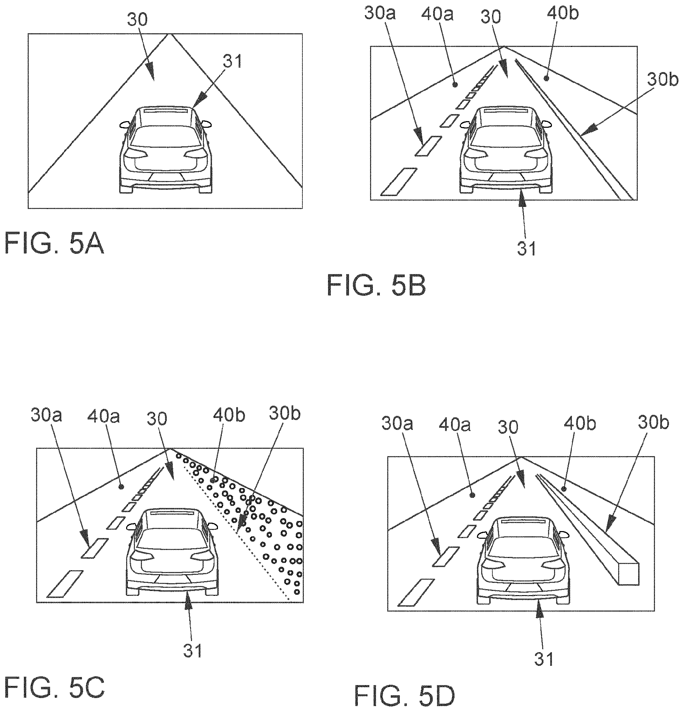

Mit Bezug zu den Figuren 5A bis 5D werden weitere Anzeigen erläutert, die bei dem Verfahren unter Berücksichtigung verschiedener Arten von Fahrbahnmarkierungen erzeugt und ausgegeben werden können. Auch hier wird von dem oben mit Bezug zu Figur 1 erläuterten Fahrerinformationssystem ausgegangen und die Objekte werden, soweit möglich, mit den bereits oben verwendeten Bezugszeichen bezeichnet.

Bei dem in Figur 5A gezeigten Fall wurden keine Fahrbahnmarkierungen auf der Fahrbahn 20 erkannt. Es wird lediglich das Ego-Objekt 31, welches das Ego-Fahrzeug 21 repräsentiert, dargestellt sowie ein Fahrspurobjekt 30, das bei dem Ausführungsbeispiel gleichmäßig grau gezeigt ist. Bei weiteren Ausführungsbeispielen sind andere Darstellungen möglich, jedoch erfolgt die Anzeige so, dass keine einer Fahrbahnmarkierung vergleichbaren Objekte angezeigt werden. Der Fahrer kann dieser Anzeige entnehmen, dass die Fahrt des Ego-Fahrzeugs 21 ohne Orientierung an erkannten Fahrbahnmarkierungen erfolgt, sodass beispielsweise Fahrerassistenzsysteme zur Quersteuerung nur eingeschränkt oder nicht verwendet werden können.

Bei dem in Figur 5B gezeigten Fall wurde erkannt, dass die Fahrspur 20b, auf der sich das Ego-Fahrzeug 21 befindet, links und rechts von Fahrbahnmarkierungen begrenzt wird. Diese wurden den Abgrenzungsmarkierungs-Klassen "gestrichelte Fahrbahnmarkierung" beziehungsweise "durchgezogene Fahrbahnmarkierung" zugeordnet. Ferner wurden benachbarte Fahrspuren erkannt. Die Fahrerinformationsanzeige umfasst neben dem Ego-Objekt 31 und dem Fahrspurobjekt 30, welches die aktuell benutzte Fahrspur 20b repräsentiert, auch grafische Objekte für die links 40a und rechts 40b benachbarten Fahrspuren sowie Fahrbahnmarkierungen 30a, 30b, die gemäß den erfassten Abgrenzungsmarkierungs-Klassen gebildet sind und die wesentlichen Charakteristika, das heißt die gestrichelte beziehungsweise durchgezogene Ausbildung, entsprechend den tatsächlichen Fahrbahnmarkierungen wiedergeben.

Bei dem in Figur 5C gezeigten Fall wurde erkannt, dass - anders als bei dem in Figur 5B gezeigten Fall, die eigene Fahrspur 20b des Ego-Fahrzeugs 21 nicht von einer rechten Fahrspurmarkierung begrenzt wird. Stattdessen wurde ein Übergang von der Fahrbahn zu einem Bankettbereich detektiert. In der Fahrerinformationsanzeige wird dies im Unterschied zur dem in Figur 5B gezeigten Fall dadurch ausgegeben, dass das grafische Objekt 40b für die rechte benachbarte Spur einen Bankettbereich darstellt, der an das Fahrspurobjekt 30 mit dem Ego-Objekt 31 angrenzt.

Der in Figur 5D gezeigte Fall unterscheidet sich von demjenigen der Figur 5B dadurch, dass die aktuelle Fahrspur 20b des Ego-Fahrzeugs 21 rechts von einem Bordstein begrenzt wird. Dies wird in der Fahrerinformationsanzeige dadurch angezeigt, dass rechts neben dem Fahrspurobjekt 30 ein grafisches Abgrenzungsobjekt 30b dargestellt wird, das einen Bordstein repräsentiert.

Bei weiteren Ausführungsbeispielen können Fahrbahnmarkierungen auch Leitplanken, eine Vegetation oder Randbebauung oder andere Abgrenzungsmarkierungen und Strukturen gemäß den verschiedenen Abgrenzungsmarkierungs-Klassen umfassen.

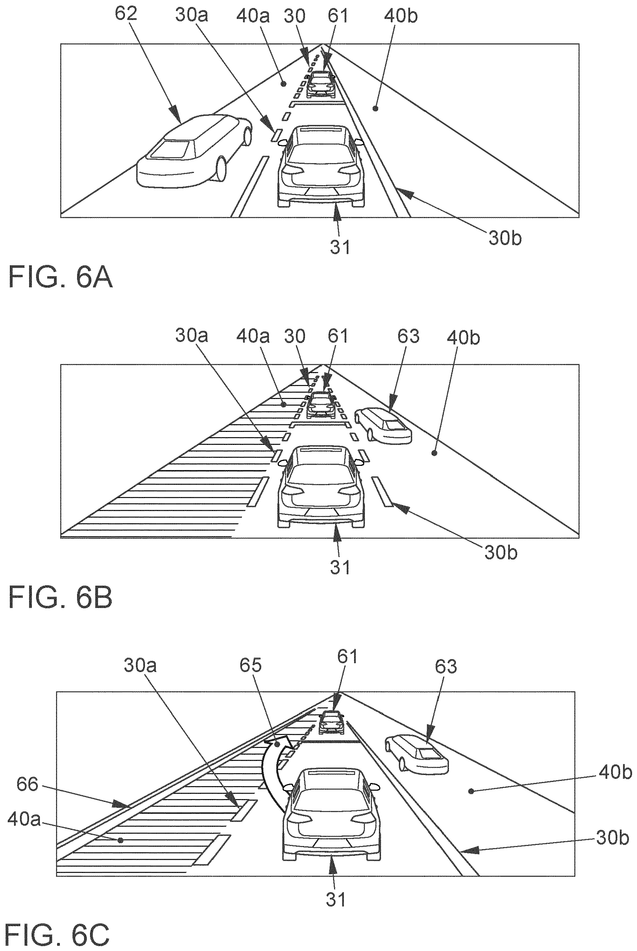

Mit Bezug zu den Figuren 6A bis 6C werden weitere Anzeigen erläutert, die bei dem Verfahren für einen geplanten Spurwechsel erzeugt und ausgegeben werden können. Auch hier wird von dem oben mit Bezug zu Figur 1 erläuterten Fahrerinformationssystem ausgegangen und die Objekte werden, soweit möglich, mit den bereits oben verwendeten Bezugszeichen bezeichnet.

Die Figuren 6A bis 6C umfassen jeweils ein Ego-Objekt 31, welches das Ego-Fahrzeug 21 repräsentiert. Dieses ist statisch gezeigt und stets an der gleichen Position innerhalb der Fahrerinformationsanzeige angeordnet. Die Bewegung des Ego-Fahrzeugs 21 wird dadurch dargestellt, dass die dargestellte Umgebung sich so gegenüber dem Ego-Objekt 31 bewegt, wie dies aus dem Koordinatensystem des Ego-Fahrzeugs 21 erscheint. Insbesondere bewegen sich Strukturen der Fahrbahn gegenüber dem statischen Ego-Objekt 31, einschließlich gekrümmte Bereiche sowie Fahrbahnmarkierungen 30a, 30b, entsprechend der tatsächlichen Eigenbewegung des Ego-Fahrzeugs 21 auf der Fahrbahn 20.

Die Anzeige wird perspektivisch aus einer Position leicht hinter und oberhalb des virtuellen Ego-Objekts 31 gebildet. Die Anzeige umfasst jeweils ein Fahrspurobjekt 30, welches die aktuell genutzt Fahrspur 20b des Ego-Fahrzeugs 21 repräsentiert, sowie Nachbar-Fahrspurobjekte 40a, 40b für benachbarte Fahrspuren 20a.

In allen Fällen wurde zudem ein vorausfahrendes Fahrzeug 23 detektiert, das nunmehr durch ein Verkehrsteilnehmerobjekt 61, das in der Darstellung vor dem Ego-Objekt 31 angeordnet ist, repräsentiert wird. Die Darstellung wird dabei so erzeugt, dass der angezeigte Abstand zwischen dem Ego-Objekt 31 und dem Objekt des vorausfahrenden Fahrzeugs 61 den tatsächlichen Abstand der Fahrzeuge repräsentiert. Das heißt, der Fahrer kann anhand der Anzeige den tatsächlichen Abstand erfassen und insbesondere Änderungen wahrnehmen.

Der weitere Verkehrsteilnehmer wird durch das virtuelle Verkehrsteilnehmerobjekt 61 so dargestellt, dass wesentliche darstellungsrelevante Merkmale seines realen Erscheinungsbildes in der Anzeige wiedergegeben werden. Bei dem Ausführungsbeispiel werden hierzu der Fahrzeugtyp und die Farbe des weiteren Verkehrsteilnehmers 23 erfasst. Die Erfassung erfolgt mittels einer Kamera des Ego-Fahrzeugs 1. Bei weiteren Ausführungsbeispielen wird alternativ oder zusätzlich eine datentechnische Verbindung zu dem weiteren Verkehrsteilnehmer 23 hergestellt, insbesondere mittels Car2Car-Kommunikation. Das dem vorausfahrenden Verkehrsteilnehmer 23 zugeordnete grafische Verkehrsteilnehmer-Objekt 61 wird dann so gebildet, dass es die Darstellung den Fahrzeugtyp und die Farbe korrekt wiedergibt. Bei anderen Ausführungsbeispielen können alternativ oder zusätzlich andere Merkmale des vorausfahrenden Fahrzeugs 23 bei der Darstellung des entsprechenden grafischen Verkehrsteilnehmerobjekts 63 wiedergegeben werden.

Die Figuren 6A bis 6C umfassen ferner eine vor dem Ego-Objekt 31 auf dem Fahrspur Objekt 30 angeordnete waagrechte Linie, die einen eingestellten Mindestabstand des Ego-Fahrzeug 21 von dem vorausfahrenden Fahrzeug 23 darstellt.

Bei dem in Figur 6A gezeigten Fall wurde erfasst, dass die aktuelle Fahrspur 20b rechts von einer durchgezogenen und links von einer durchbrochenen Linie begrenzt wird. Die erfassten Fahrbahnmarkierungen wurden entsprechenden Abgrenzungsmarkierungs-Klassen zugeordnet und die Abgrenzungsmarkierungen werden durch Darstellungen entsprechender Fahrbahnmarkierungen 30a, 30b wiedergegeben.

Ferner wurde ein weiterer Verkehrsteilnehmer auf einer links benachbarten Fahrspur erfasst, der sich etwa auf der Höhe des Ego-Fahrzeugs 21 befindet. Die Anzeige umfasst ein entsprechendes grafisches Verkehrsteilnehmer-Objekt 62 auf einem linken Nachbar-Fahrspurobjekt 40a, das die reale Anordnung der Fahrzeuge wiedergibt. In dieser Fahrsituation wurde bestimmt, dass das Ego-Fahrzeug 21 nicht sicher auf die links benachbarte Fahrspur wechseln kann. Das linke Nachbar-Fahrspur Objekt 40a ist daher nicht hervorgehoben, sondern gleichmäßig grau gefärbt.

Bei dem in Figur 6B gezeigten Fall wurde ebenfalls ein weiterer Verkehrsteilnehmer auf einer benachbarten Fahrspur detektiert, diesmal jedoch auf der rechts benachbarten Fahrspur. Die Fahrerinformationsanzeige umfasst daher ein Verkehrsteilnehmer-Objekt 63 im Bereich des rechten Nachbar-Fahrspurobjekts 40b. Es wurde bestimmt, dass ein Spurwechsel auf die links benachbarte Fahrspur sicher durchgeführt werden kann. Das linke Nachbar-Fahrspur Objekt 40a ist daher hervorgehoben dargestellt. Bei diesen und weiteren Ausführungsbeispielen können verschiedene Hervorhebungen genutzt werden, beispielsweise mittels einer Schraffur, Farbe, Helligkeit oder durch einen dynamischen Effekt, beispielsweise ein Blinken.

Bei dem in Figur 6C gezeigten Fall wurde, ausgehend von dem oben mit Bezug zu Figur 6B erläuterten Fall, ferner detektiert, dass der Fahrer das Ego-Fahrzeug 21 einen Blinker nach links aktiviert hat. Er signalisiert dadurch, dass er einen Spurwechsel nach links durchführen will. Das Ego-Objekt 31 wird in der Darstellung mit leuchtendem Blinklicht ausgegeben. Da in der dargestellten Fahrsituation der Spurwechsel nach links sicher durchgeführt werden kann, wird zusätzlich zu der Hervorhebung des linken Nachbar-Fahrspurobjekts 40a ein Pfeil 65 als Signal-Objekt 65 angezeigt. Der Fall ist insbesondere farblich grün gestaltet. Bei weiteren Ausführungsbeispielen kann die Farbe davon abhängen, ob der Spurwechsel sicher durchgeführt werden kann; der Pfeil 65 kann etwa rot gefärbt sein, wenn dies nicht der Fall ist. Ferner kann das Signal-Objekt 65 auch anders ausgebildet sein, zum Beispiel nach Art eines Lauflichts oder mit einem anderen Symbol.

Bei dem in Figur 6C gezeigten Fall wurde ferner erfasst, dass die links benachbarte Fahrspur durch eine durchgezogene Linie nach links hin begrenzt wird. Zudem wird nun die aktuelle Fahrspur 20b des Ego-Fahrzeugs 21 nach rechts hindurch eine durchgezogene Linie begrenzt.

Diese Fahrbahnmarkierungen werden entsprechend in Figur 6C anhand von Abgrenzungsobjekten 30a, 30b, 66 angezeigt.

Bei weiteren Ausführungsbeispielen wird erfasst, dass der weitere Verkehrsteilnehmer 23 ein bestimmtes Fahrmanöver plant. Hierzu werden Lichtsignale eines Fahrtrichtungsanzeigers ausgewertet oder Informationen über eine Car2Car-Verbindung empfangen. Es wird ein Fahrmanöver-Objekt bei dem Verkehrsteilnehmer-Objekt 61 angezeigt, das signalisiert, dass das vorausfahrende Fahrzeug 23 beispielsweise einen Spurwechsel plant.

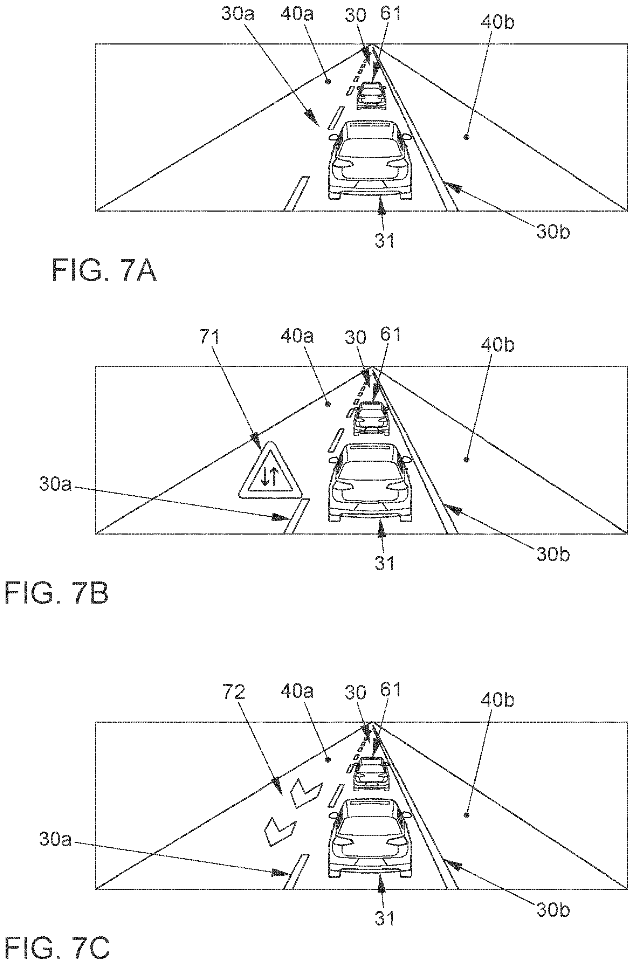

Mit Bezug zu den Figuren 7A bis 7C werden weitere Anzeigen erläutert, die bei dem Verfahren unter Berücksichtigung gegebenenfalls drohenden Gegenverkehrs erzeugt und ausgegeben werden können. Auch hier wird von dem oben mit Bezug zu Figur 1 erläuterten Fahrerinformationssystem ausgegangen und die Objekte werden, soweit möglich, mit den bereits oben verwendeten Bezugszeichen bezeichnet.

Bei dem in Figur 7A gezeigten Fall wurde kein Gegenverkehr auf der Fahrspur des Ego-Fahrzeugs 21 sowie auf den benachbarten Fahrspuren detektiert. Die Darstellung umfasst in diesem Fall das Fahrspurobjekt 30 sowie rechts und links angrenzende Nachbar-Fahrspurobjekte 40a, 40b. Ferner werden ein Ego-Objekt 31 sowie ein vorausfahrendes Fahrzeug 23 durch ein Verkehrsteilnehmer-Objekt 61 dargestellt.

Bei den in den Figuren 7B und 7C gezeigten Fällen wurde erkannt, dass auf der in Fahrtrichtung links neben der aktuellen Fahrspur des Ego-Fahrzeugs 21 angeordneten Fahrspur 20a mit Gegenverkehr zu rechnen ist. Die Darstellungen unterscheiden sich von der oben mit Bezug zu Figur 7A dargestellten Darstellung durch ein grafisches Gegenverkehr-Warnobjekt 71, 72, dass auf dem Nachbar-Fahrspurobjekt 40a angeordnet ist. Die Darstellung erfolgt insbesondere wie bei einer auf der Fahrbahnoberfläche angebrachten Fahrbahnmarkierung.

Bei dem Ausführungsbeispiel bewegt sich das Gegenverkehr-Warnobjekt 71, 72 mit dem Ego-Objekt 31. Bei weiteren Ausführungsbeispielen kann das Gegenverkehr-Warnobjekt 71, 72 im Koordinatensystem der dargestellten Fahrbahnoberfläche statisch sein, sodass sich das Ego-Objekt 31 an dem Gegenverkehr-Warnobjekt 71, 72 vorbei zu bewegen scheint. In diesem Fall kann das Gegenverkehr-Warnobjekt 71, 72 in mehrfacher Ausführung, etwa in periodischen Abständen immer wieder auftauchen, solange auf der benachbarten Fahrspur 20a mit Gegenverkehr zu rechnen ist.

Bei weiteren Ausführungsbeispielen wird alternativ oder zusätzlich ein entgegenkommendes Verkehrsteilnehmer-Objekt im Bereich eines Fahrspurobjekts dargestellt, wenn bestimmt wurde, dass auf der Fahrspur mit Gegenverkehr zu rechnen ist. Das entgegenkommende Verkehrsteilnehmer-Objekt kann dabei so ausgebildet sein, dass es einen tatsächlich entgegenkommenden Verkehrsteilnehmer darstellt. Es kann ferner angezeigt werden, auch wenn kein anderer Verkehrsteilnehmer detektiert wurde, um den Fahrer vor dem potentiellen Auftreten von Gegenverkehr zu warnen. Die Darstellung des entgegenkommenden Verkehrsteilnehmer-Objekts kann sich danach unterscheiden, ob es einen tatsächlich detektierten Verkehrsteilnehmer repräsentiert oder ob es nur zur Warnung angezeigt wird.

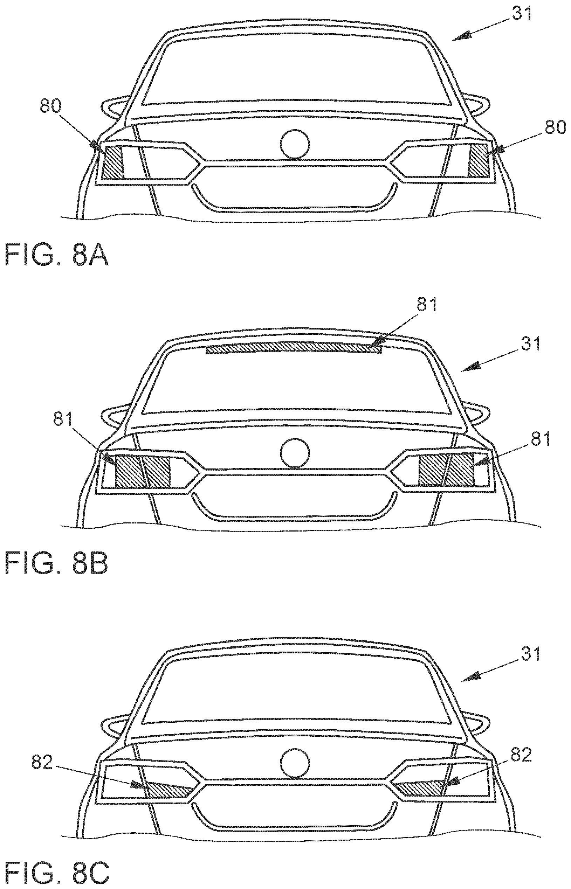

Mit Bezug zu den Figuren 8A bis 8C werden verschiedene Darstellungen des Ego-Objekts in der Fahrerinformationsdarstellung erläutert, die bei dem Verfahren erzeugt und ausgegeben werden können. Auch hier wird von dem oben mit Bezug zu Figur 1 erläuterten Fahrerinformationssystem ausgegangen und die Objekte werden, soweit möglich, mit den bereits oben verwendeten Bezugszeichen bezeichnet.

Bei dem Ausführungsbeispiel werden Zustände der Beleuchtungsanlage 7 des Ego-Fahrzeugs 1 erfasst und die Darstellung des Ego-Objekts 31 in der Fahrerinformationsanzeige wird so gebildet, dass sie die Zustände verschiedener Elemente der Beleuchtungseinrichtung 7 wiedergibt. Zum Beispiel können rückwärtige Leuchten und Scheinwerfer entsprechend den erfassten Zuständen beleuchtet oder unbeleuchtet angezeigt werden.

Das Ego-Objekt 31 umfasst eine Darstellung des Ego-Fahrzeugs 1 aus einer Perspektive in Fahrtrichtung von hinten, sodass das Fahrzeugheck sichtbar ist. In den Figuren wird jeweils nur ein Ausschnitt gezeigt, der insbesondere die wesentlichen aus dieser Perspektive sichtbaren Elemente der Beleuchtungsanlage 7 des Ego-Fahrzeugs zeigt.

Bei dem in Figur 8A gezeigten Fall sind beidseitig Fahrtrichtungsanzeiger 80 hervorgehoben dargestellt, insbesondere durch eine erhöhte Helligkeit und eine gelbe Farbe. Dies ist beispielsweise der Fall, wenn ein Warnblinklicht aktiviert ist. Die Darstellung ist bei dem Ausführungsbeispiel dynamisch so gebildet, dass ein periodisch wiederkehrendes An- und Ausschalten der Fahrtrichtungsanzeiger 80 ausgegeben wird, insbesondere so wie es die Beleuchtungseinrichtung 7 des Ego-Fahrzeugs 1 tatsächlich durchführt.

Bei weiteren Ausführungsbeispielen wird eine Aktivierung eines einzelnen Fahrtrichtungsanzeigers 80 dargestellt, etwa bei einem Blinklicht.

Bei dem in Figur 8B gezeigten Fall sind Leuchten einer Bremsleuchte 81 hervorgehoben dargestellt, insbesondere durch eine erhöhte Helligkeit und eine rote Farbe. Analog dazu sind bei dem in Figur 8C gezeigten Fall die Rückleuchten 82 hervorgehoben dargestellt, hier durch eine erhöhte Helligkeit und eine weiße Farbe.

Analog dazu können bei weiteren Ausführungsbeispielen andere Leuchten dargestellt werden, etwa eine Nebelschlussleuchte oder ein Markierungslicht. Ferner können verschiedene Kombinationen von Leuchten hervorgehoben dargestellt werden. Bei einem weiteren Ausführungsbeispiel wird ferner eine tatsächliche Beleuchtung erfasst, wobei auch beispielsweise Fehlfunktionen detektiert werden. Die Darstellung kann dann an die tatsächlich detektierte Beleuchtung angepasst werden.

Bei weiteren Ausführungsbeispielen wird ein Betriebszustand eines nach vorne gerichteten Scheinwerfers des Ego-Fahrzeugs erfasst, etwa ein Abblendlicht, Fernlicht, Standlicht, Nebelscheinwerfer, Tagfahrlicht oder Weitstrahler. Dabei wird insbesondere eine Helligkeit, Farbe, Leuchtweite und/oder Intensitätsverteilung erfasst. Das Ego-Objekt wird anhand des erfassten Betriebszustands gebildet, analog zu den oben erläuterten Darstellungen.

Ferner kann die Darstellung weitere grafische Objekte in einer Umgebung des Ego-Objekts 31 umfassen und diese werden insbesondere in Abhängigkeit von dem erfassten Betriebszustand der Beleuchtungseinrichtung gebildet. Beispielsweise wird ein Fahrspur-Objekt 30 mit einer bestimmten Textur und/oder Helligkeitsverteilung dargestellt, wobei die von der Beleuchtungseinrichtung 7 erzeugte Lichtverteilung auf der Fahrbahn 20, insbesondere im Bereich vor dem Ego-Fahrzeug 21, dargestellt wird. Auch andere Verkehrsteilnehmer können in Abhängigkeit davon dargestellt werden, ob und in welcher Weise sie von der Beleuchtungseinrichtung 7 beleuchtet werden. Die Darstellung wird so erzeugt, dass eine Leuchtweite und eine Breite der Lichtverteilung aus der Darstellung erfassbar ist, wobei insbesondere die Leuchtweite und/oder Intensität von einem Winkel relativ zur Fahrtrichtung des Ego-Fahrzeugs 21 abhängt.

Dabei kann eine tatsächliche Beleuchtung physischer Objekte durch Sensoren der Erfassungseinheit 2 erfasst werden und/oder es kann ein physikalisches Modell genutzt werden, um die Beleuchtung von Objekten durch die Beleuchtungseinrichtung 7 zu bestimmen.

Insbesondere wird der Einfluss der Beleuchtungsanlage auf die Erscheinung des Umfelds möglichst realistisch wiedergegeben.

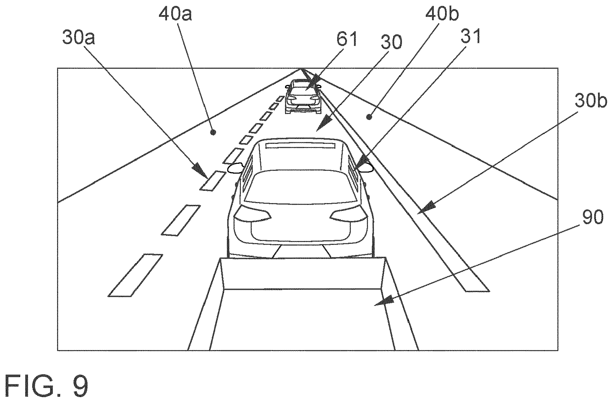

Mit Bezug zu Figur 9 wird ein Ausführungsbeispiel einer anhand des Verfahrens erzeugten Fahrerinformationsanzeige mit einem Anhänger-Objekt erläutert. Auch hier wird von dem oben mit Bezug zu Figur 1 erläuterten Fahrerinformationssystem ausgegangen und die Objekte werden, soweit möglich, mit den bereits oben verwendeten Bezugszeichen bezeichnet.

Bei dem Ausführungsbeispiel wird ein Betriebszustand der Anhängevorrichtung 8 des Ego-Fahrzeugs 1 erfasst. Wenn erfasst wird, dass eine Vorrichtung an der Anhängevorrichtung angehängt ist, dann wird das Ego-Objekt 31 in Kombination mit einem grafischen Anhänger-Objekt 90 gebildet.

Die Anzeige erfolgt dabei so, dass das Ego-Objekt 31 mit der grafischen Anhängerdarstellung perspektivisch so von hinten angezeigt wird, dass ein in der Darstellung vor dem Ego-Objekt 31 liegender Fahrbahnabschnitt des Fahrbahnobjekts 30 sichtbar ist.

Die Anhängerdarstellung kann sich je nach dem Typ des Anhängerobjekts unterscheiden, beispielsweise durch seine Größe, Form und Farbe. Insbesondere wird durch die grafische Anhängerdarstellung einen schematisch vereinfachtes Abbild des realen Anhängerobjekts wiedergegeben.

Bei dem Ausführungsbeispiel umfasst die Fahrerinformationsanzeige ferner ein Verkehrsteilnehmer-Objekt 61, das ein vorausfahrendes Fahrzeug 23 repräsentiert, ein Fahrspurobjekt 30, das die aktuelle Fahrspur 20b des Ego-Fahrzeugs 1 repräsentiert, sowie Nachbar-Fahrspurobjekte 40a, 40b für benachbarte Fahrspuren 20a. Zudem werden die Fahrbahnmarkierungen mittels Abgrenzungs-Markierungsobjekten 30a, 30b wiedergegeben.

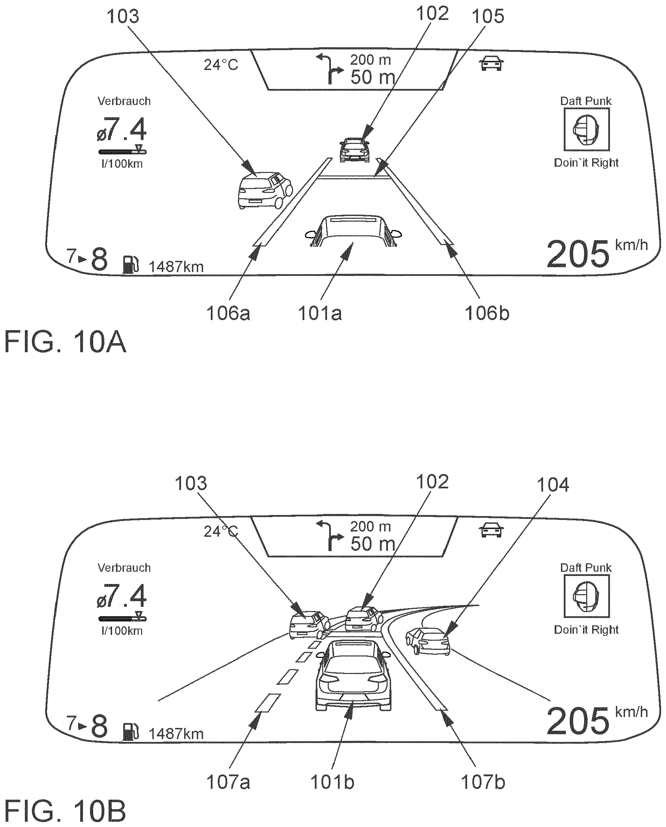

Mit Bezug zu den Figuren 10A und 10B werden Ausführungsbeispiele von Fahrerinformationsanzeigen für verschiedene Automatisierungsstufen erläutert. Es wird von den oben erläuterten Ausführungsbeispielen ausgegangen.

Die Fahrerinformationsanzeigen umfassen neben Umfelddarstellungen weitere an sich bekannte Informationselemente. Hierzu gehören beispielsweise Elemente zur Ausgabe einer aktuellen Geschwindigkeit, eines aktuellen Gangs, Verbrauchs oder wiedergegebenen Musiktitels. Ferner werden Fahranweisungen eines Navigationssystems ausgegeben.

Bei dem Fall der Figur 10A wurde detektiert, dass das Fahrerassistenzsystem 6 in einer niedrigeren Automatisierungsstufe betrieben wird. Es wird daher eine reduzierte Umfelddarstellung ausgegeben. Bei dem Ausführungsbeispiel ist eine Längssteuerung des Ego-Fahrzeugs 1 aktiviert, bei der die Fahrtgeschwindigkeit so gesteuert wird, dass ein bestimmter Mindestabstand zu vorausfahrenden Verkehrsteilnehmern eingehalten und ein Rechtsüberholen vermieden wird. Bei weiteren Ausführungsbeispielen sind Fahrerassistenzmodule so aktiviert, dass statt der Längssteuerung die Quersteuerung des Ego-Fahrzeugs 1 unterstützt wird. Dabei wird die reduzierte Umfelddarstellung bei einer Automatisierungsstufe ausgegeben, bei der die Steuerung entweder in Längs- oder in Querrichtung unterstützt wird.

Die Fahrerinformationsanzeige der Figur 10A umfasst eine Umfelddarstellung mit einem Ego-Objekt 101a für das Ego-Fahrzeug 1, einem Verkehrsteilnehmer-Objekt 102 für ein vorausfahrendes Fahrzeug sowie einem weiteren Verkehrsteilnehmer-Objekt 103 für ein weiteres Fahrzeug auf einer links benachbarten Fahrspur 20a. Die aktuelle Fahrspur 20b, auf welcher sich das Ego-Fahrzeug 1 befindet, wird durch Fahrbahnmarkierungen 106a, 106b links und rechts begrenzt. In einem bestimmten Abstand vor dem Ego-Objekt 101a wird ein Abstands-Objekt 105 dargestellt, das einen eingestellten Sicherheitsabstand zu vorausfahrenden Verkehrsteilnehmern repräsentiert.

Das Ego-Objekt 101a wird hier so dargestellt, dass es nicht vollständig erkennbar ist. Die dargestellte Perspektive geht von einem virtuellen Punkt oberhalb und hinter dem Ego-Fahrzeug 1 aus, sodass ein Teil des Ego-Fahrzeugs 1 sowie ein Teil der vorliegenden Fahrbahn dargestellt wird. Nach der Fahrspuren werden lediglich angedeutet und nicht in voller Breite gezeigt.

Bei der Fahrerinformationsanzeige wird das Verkehrsteilnehmer-Objekt 102 für das vorausfahrende Fahrzeug als Regelobjekt der Geschwindigkeits- und Abstandsregelung angezeigt. Ferner wird das weitere Verkehrsteilnehmer-Objekt 103 für das Fahrzeug auf der links benachbarten Spur als Regelobjekt für die Verhinderung des Rechtsüberholens angezeigt. Weitere Verkehrsteilnehmer werden hier nicht ausgegeben, sofern sie keine direkte Bedeutung für die automatische Regelung der Fahrt haben.

Der vor dem Ego-Objekt 101a dargestellte Fahrbahnabschnitt wird mit einem geraden Verlauf ausgegeben.

Bei dem in Figur 10B gezeigten Fall unterscheidet sich die Fahrerinformationsanzeige von dem oben erläuterten Fall der Figur 10A durch die Darstellung des Umfelds. Es wurde detektiert, dass das Fahrerassistenzsystem 6 mit einer höheren Automatisierungsstufe betrieben wird, wobei sowohl in eine Längssteuerung als auch eine Quersteuerung des Ego-Fahrzeugs 1 aktiv automatisch eingegriffen wird. Es wird daher eine erweiterte Darstellung angezeigt.

Die Umfelddarstellung umfasst einen größeren Bereich des Umfelds, insbesondere werden die links und rechts benachbarten Fahrspuren in voller Breite dargestellt. Ferner wird ein weiteres Verkehrsteilnehmer-Objekt 104 dargestellt, das einen weiteren Verkehrsteilnehmer repräsentiert, welches jedoch nicht für das Fahrerinformationssystem 6 als Regelobjekt dient. Das heißt, die Fahrerinformationsanzeige umfasst auch solche Verkehrsteilnehmer, die nicht unmittelbar für die automatische Unterstützung der Fahrt durch das Fahrerassistenzsystem 6 genutzt werden. Die in der Fahrerinformationsanzeige dargestellten Fahrbahnmarkierungen 107a, 107b sind hier gestrichelt beziehungsweise durchgehend gezeigt.

Der vor dem Ego-Objekt 101b angezeigte Fahrbahnverlauf stellt eine gekrümmte Fahrbahn dar, wobei die Krümmung einem tatsächlichen Fahrbahnverlauf entspricht, der mittels Sensoren des Ego-Fahrzeugs 1 und anhand von Kartendaten bestimmt wird. Die Ausgabe erfolgt bei der erweiterten Darstellung dynamisch, das heißt, es wird eine Bewegung der Fahrbahn relativ zu dem statisch dargestellten Ego-Objekt 101b dargestellt, wobei sich auch die Krümmung entsprechend den tatsächlichen Gegebenheiten verändern kann.

Bei einem Ausführungsbeispiel wird ein animierter Übergang zwischen der reduzierten Ansicht der Figur 10A und der erweiterten Ansicht der Figur 10B dargestellt, nachdem eine Nutzereingabe zum Wechsel zwischen verschiedenen Automatisierungsstufen erfasst wurde. Bei diesem Fall wird von einer niedrigeren zu einer höheren Automatisierungsstufe umgeschaltet. Insbesondere erfolgt die Umschaltung zwischen Automatisierungsstufen durch Betätigen einer Taste am Lenkrad oder eines Bremspedals.

Bei dem animierten Übergang wird die Perspektive der Darstellung so verlagert, dass sich das Ego-Objekt 101a nach vorne zu bewegen scheint, sodass ein größerer Teil der Darstellung des Ego-Fahrzeugs 1 sichtbar wird. Beim Erreichen der erweiterten Darstellung der Figur 10B wird das Ego-Objekt 101b vollständig in einer heckseitigen Ansicht dargestellt. Gleichzeitig mit der Verlagerung der Perspektive werden auch weitere Objekte im Umfeld dargestellt, das heißt der Radius oder Maximalabstand der weiteren dargestellten Objekte vergrößert sich ebenso wie die Anzahl der weiteren Objekte.

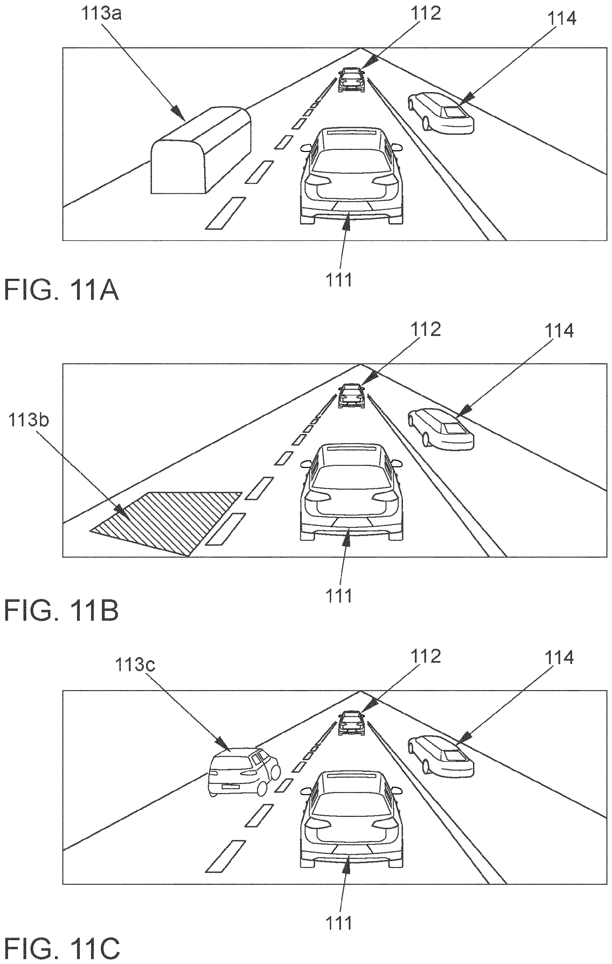

Mit Bezug zu den Figuren 11A bis 11D werden Ausführungsbeispiele von Fahrerinformationsanzeigen mit unklassifizierten und klassifizierten anderen Verkehrsteilnehmern erläutert. Dabei wird wiederum von den oben erläuterten weiteren Ausführungsbeispielen ausgegangen.

Bei den Fällen der Figur 11A und Figur 11B umfasst eine erweiterte Umfelddarstellung eine heckseitige Ansicht eines Ego-Objekt 111, welches das Ego-Fahrzeug 1 repräsentiert, ein Verkehrsteilnehmer-Objekt 112 für einen vorausfahrendes Fahrzeug sowie ein weiteres Verkehrsteilnehmer-Objekt 114 für ein weiteres Fahrzeug, dass sich rechts seitlich vor dem Ego-Fahrzeug 1 befindet. Die anderen Verkehrsteilnehmer wurden erfasst und einer spezifischen Verkehrsteilnehmer-Klasse zugeordnet, wobei sie im vorliegenden Fall als PKW identifiziert wurden. Ihre Darstellung erfolgt so, dass der Fahrer der Fahrerinformationsanzeige entnehmen kann, dass es sich jeweils um PKW handelt.

Bei weiteren Ausführungsbeispielen werden weitere Charakteristika der anderen Verkehrsteilnehmer erfasst, etwa ihre Farbe, der Fahrzeugtyp oder ein Zustand einer Beleuchtungsanlage. Die Darstellung der Verkehrsteilnehmer-Objekte 112, 114 erfolgten in Abhängigkeit von den erfassten Charakteristika, sodass eine detailliertere und der Realität nähere Darstellung der Verkehrsteilnehmer erfolgt.

Die Darstellung umfasst ferner ein generisches Verkehrsteilnehmer-Objekt 113a, 113b, das einen weiteren Verkehrsteilnehmer links neben dem Ego-Fahrzeug 1 repräsentiert. Dieser weitere Verkehrsteilnehmer wurde noch nicht genau identifiziert und konnte lediglich einer generischen Verkehrsteilnehmer-Klasse zugeordnet werden. Bei dem Ausführungsbeispiel handelt es sich um einen überholenden Verkehrsteilnehmer, bei dem mittels Radarsensoren im hinteren und seitlichen Bereich des Ego-Fahrzeugs 1 lediglich seine Position relativ zu dem Ego-Fahrzeug 1 erfasst wurde; es konnten jedoch noch keine Daten einer Kamera des Ego-Fahrzeugs 1 erfasst werden, die eine genauere Kategorisierung und Zuordnung einer spezifischen Verkehrsteilnehmer-Klasse erlauben würden.

Bei dem in Figur 11A gezeigten Fall wird das generische Verkehrsteilnehmer-Objekt 113a als Quader mit abgerundeten Kanten oder als eine ähnliche dreidimensionale Form dargestellt. Bei dem in Figur 11B gezeigten Fall erfolgt die Darstellung des generischen Verkehrsteilnehmer-Objekts 113b als schraffierte Fläche. Das generische Verkehrsteilnehmer-Objekt 113a, 113b ist jeweils so dargestellt, dass die Position des zugeordneten Verkehrsteilnehmer relativ zu dem Ego-Fahrzeug 1 erfassbar ist.

Bei einem weiteren Ausführungsbeispiel weist das generische Verkehrsteilnehmer-Objekt 113a, 113b eine Längenausdehnung in Fahrtrichtung auf. Da typischerweise die Länge eines anderen Verkehrsteilnehmers, der sich von hinten dem Ego-Fahrzeug 1 nähert, nicht durch Sensoren des Ego-Fahrzeugs 1 erfasst wird, wird das generische Verkehrsteilnehmer-Objekt 113a, 113b in seiner Längsausdehnung wachsend dargestellt, während es an dem Ego-Fahrzeug 1 vorbeifährt. Das heißt, in der Darstellung wächst das generische Verkehrsteilnehmer-Objekt 113a, 113b während des Überholvorgangs in die Länge, bis detektiert wird, dass das Ende des anderen Verkehrsteilnehmers erreicht ist.

Wenn der überholenden Verkehrsteilnehmer, dem das generische Verkehrsteilnehmer-Objekt 113a, 113b in den Figuren 11A und 11B zugeordnet ist, soweit an dem Ego-Fahrzeug 1 vorbeigefahren ist, dass er in den Erfassungsbereich einer den Frontbereich vor dem Ego-Fahrzeug 1 erfassenden Kamera gelangt, wird er einer spezifischen Verkehrsteilnehmer-Klasse zugeordnet. Das heißt, es wird beispielsweise erkannt, dass es sich um einen PKW eines bestimmten Typs in einer bestimmten Farbe handelt.

Bei dem in Figur 11C gezeigten Fall wurde eine solche Klassifizierung für einen weiteren Verkehrsteilnehmer auf der links benachbarten Fahrspur durchgeführt und es wird an seiner Position ein spezifisches Verkehrsteilnehmer-Objekt 113c dargestellt, das Charakteristika des tatsächlichen Aussehens des weiteren Verkehrsteilnehmers aufweist. Es wird eine Ansicht des weiteren Verkehrsteilnehmers entsprechend der zugeordneten Verkehrsteilnehmer-Klasse dargestellt.

Bei einem Übergang von einer der Darstellungen der Figuren 11A oder 11B zu der Darstellung der Figur 11C wird eine Veränderung von einem generischen Verkehrsteilnehmer-Objekt 113a, 113b zu dem spezifischen Verkehrsteilnehmer-Objekt 113c auf an sich bekannte Weise grafisch dargestellt, etwa durch Überblenden, *Crossfading, Morphing,* stückweises oder vollständiges Ersetzen der dargestellten Elemente oder durch "Wachsen" des spezifischen Verkehrsteilnehmer-Objekts 113c aus einem generischen Verkehrsteilnehmer-Objekt 113a, 113b.

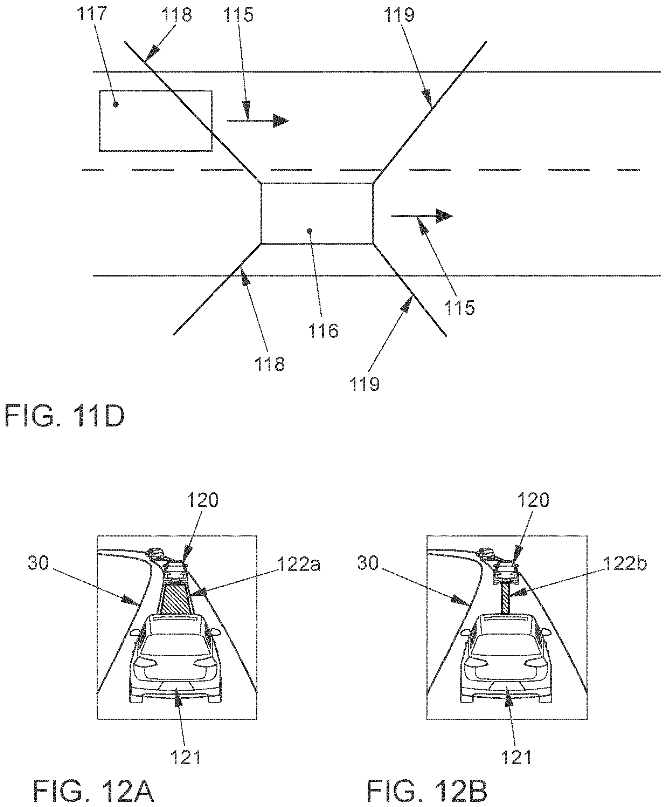

Das Verfahren, bei dem die oben erläuterten Anzeigen erzeugt werden, wird mit Bezug zu Figur 11D anhand einer konkreten Verkehrssituation näher erläutert.

Ein Ego-Fahrzeug 116 bewegt sich entlang einer Fahrspur in eine Fahrtrichtung 115, die durch einen Pfeil 115 angedeutet wird. Ferner bewegt sich ein weiterer Verkehrsteilnehmer 117 auf einer benachbarten Fahrspur ebenfalls in Fahrtrichtung 115 und nähert sich dem Ego-Fahrzeug 116 von hinten an.

Das Ego-Fahrzeug 115 umfasst Sensoren, die jeweils einen Erfassungsbereich 118, 119 aufweisen, nämlich einen hinteren Erfassungsbereich 118, der sich in den Bereich hinter dem Heck des Ego-Fahrzeugs 115 erstreckt, und einen vorderen Erfassungsbereich 119 in den Bereich vor der Front des Ego-Fahrzeugs 115 hinein.

Bei der in Figur 11D gezeigten Fahrsituation ist der weitere Verkehrsteilnehmer 117 dabei, an dem Ego-Fahrzeug 116 vorbeizufahren, das heißt, er bewegt sich mit höherer Geschwindigkeit und ist dabei, aus dem hinteren Erfassungsbereich 118 heraus und in den vorderen Erfassungsbereich 119 hinein zu fahren.

Bei dem Ausführungsbeispiel werden in dem hinteren Erfassungsbereich 118 durch einen Radarsensor Daten erfasst. Diese erlauben es, den weiteren Verkehrsteilnehmer 117 zu detektieren sowie seine Position und seinen Abstand relativ zum Ego-Fahrzeug 116 sowie seine Relativgeschwindigkeit zu erfassen. Ferner werden bei dem Ausführungsbeispiel werden in dem vorderen Erfassungsbereich 119 Bilddaten durch eine Kamera erfasst. Diese erlauben es ebenfalls, den weiteren Verkehrsteilnehmer 117 zu detektieren sowie seine Position und seinen Abstand relativ zum Ego-Fahrzeug 116 zu erfassen; ferner kann seine Relativgeschwindigkeit bestimmt werden.

Anhand der im vorderen Erfassungsbereich 119 erfassten Bilddaten kann zudem bestimmt werden, um welchen Fahrzeugtyp es sich handelt. Insbesondere werden, nachdem der weitere Verkehrsteilnehmer 117 im vorderen Erfassungsbereich 119 erfasst wurde, die Farbe des Fahrzeugs, die Fahrzeugklasse sowie Hersteller und Modell bestimmt.

Bei dem Ausführungsbeispiel wird, wenn der weitere Verkehrsteilnehmer 117 im hinteren Erfassungsbereich 118 erfasst wird, eine generische Verkehrsteilnehmer-Klasse bestimmt. Diese umfasst in dem Beispiel alle Fahrzeuge. Nach dem Eintreten des weiteren Verkehrsteilnehmers 117 in den vorderen Erfassungsbereich 119 wird eine spezifische Verkehrsteilnehmer-Klasse bestimmt, die beispielsweise alle PKW oder alle Kompaktfahrzeuge einer bestimmten Marke umfasst.

Bei dem Ausführungsbeispiel wird eine der in den Figuren 11A und 11B gezeigten Darstellungen erzeugt, solange der weitere Verkehrsteilnehmer 117 lediglich durch den Radarsensor mit dem hinteren Erfassungsbereich 118 erfasst wurde. Wenn der weitere Verkehrsteilnehmer 117 in den vorderen Erfassungsbereich 119 der Kamera gelangt, wird ein animierter Übergang zu der Darstellung der Figur 11C ausgegeben. Dabei wird ein an sich bekanntes "Morphing"-Verfahren verwendet, um eine animierte Änderung des generischen verkehrsteilnehmer-Objekts 113a, 113b zu dem spezifischen Verkehrsteilnehmer-Objekt 113c darzustellen.

Mit Bezug zu den Figuren 12A und 12B werden Ausführungsbeispiele von Fahrerinformationsanzeigen während einer Folgefahrt des Ego-Fahrzeugs erläutert. Dabei wird wiederum von den oben erläuterten weiteren Ausführungsbeispielen ausgegangen.

Die dargestellten Anzeigen werden erzeugt, wenn auf einem in Fahrtrichtung vor dem Ego-Fahrzeug 1 liegenden Fahrbahnabschnitt ein vorausfahrender weiterer Verkehrsteilnehmer 23 detektiert wird. In den Anzeigen wird die befahrene Fahrspur als Fahrspurobjekt 30 dargestellt. Die Anzeigen umfassen ferner ein Ego-Objekt 121, welches das Ego-Fahrzeug 1 repräsentiert, sowie ein Verkehrsteilnehmer-Objekt 120, welches das vorausfahrende Fahrzeug 23 repräsentiert. Der dargestellte Abstand zwischen dem Ego-Objekt 121 und dem Verkehrsteilnehmer-Objekt 120 ist dabei gemäß einem erfassten tatsächlichen Abstand zwischen dem Ego-Fahrzeug 1 und dem vorausfahrenden Fahrzeug 23 gebildet, das heißt, aus den Anzeigen ist der quantitative Wert des Abstands entnehmbar. Die Anordnung der geografischen Objekte 120, 121 zueinander und relativ zur grafischen Darstellung der Fahrspur entspricht den physischen Verhältnissen.

Das Fahrerassistenzsystem 6 ist mit einem Fahrerassistenzmodul aktiviert, das teilweise automatisch in die Quersteuerung des Ego-Fahrzeugs 1 eingreift. Insbesondere wird hier durch Aufbringen eines Lenkmoments in die Lenkung eingegriffen, um das Ego-Fahrzeug 1 auf der Fahrspur zu halten.

Bei dem Ausführungsbeispiel wurden keine Fahrbahnmarkierungen an den Rändern der aktuell befahrenen Fahrspur detektiert. Da keine Orientierung anhand von Fahrbahnmarkierungen möglich ist, wird eine Folgefahrt durchgeführt, bei der eine Soll-Trajektorie des Ego-Fahrzeugs 1 insbesondere hinsichtlich der Querablage des Ego-Fahrzeugs 1 auf der befahrenen Fahrspur gesteuert wird. Die Querablage betrifft dabei die Position in einer Richtung quer zur Fahrtrichtung. Das heißt, die Soll-Trajektorie des Ego-Fahrzeugs 1 wird so gebildet, dass sie einer erfassten Trajektorie des vorausfahrenden Fahrzeugs 23 folgt.

Die Soll-Trajektorie des Ego-Fahrzeugs 1 wird mittels eines Trajektorien-Objekt 122a, 122b ausgegeben, das sich bei dem Ausführungsbeispiel von dem Ego-Objekt 121 zu dem Verkehrsteilnehmer-Objekt 120 erstreckt. Bei dem in Figur 12A gezeigten Fall wird das Trajektorien-Objekt 122a als breite Linie mit hervorgehobenen Rändern dargestellt. Bei dem in Figur 12B gezeigten Fall wird das Trajektorien-Objekt 122b dagegen als schmalere Linie dargestellt. Weitere Darstellungsformen sind ebenso denkbar.

Bei weiteren Ausführungsbeispielen wird eine Absicht erkannt, mit dem Ego-Fahrzeug 1 einen Spurwechsel durchzuführen. Zum Beispiel wird erfasst, dass der Fahrer einen Blinker betätigt oder dass ein automatischer Spurwechsel initiiert werden soll. In diesem Fall kann ein Fahrerassistenzmodul anhand von Umfelddaten prüfen, ob der Spurwechsel sicher durchgeführt werden kann. Insbesondere werden hier die Positionen anderer Verkehrsteilnehmer analysiert und der Spurwechsel wird als sicher durchführbar erkannt, wenn keine Kollisionsgefahr besteht. Die Soll-Trajektorie wird dann so erzeugt, dass sie das Ego-Fahrzeug auf die benachbarte Fahrspur führt. Das Trajektorien-Objekt 122a, 122b kann dann analog zu den in den Figuren 12A und 12B gezeigten Fällen von einer virtuellen Front des Ego-Objekts 121 zu der benachbarten Fahrspur führen.

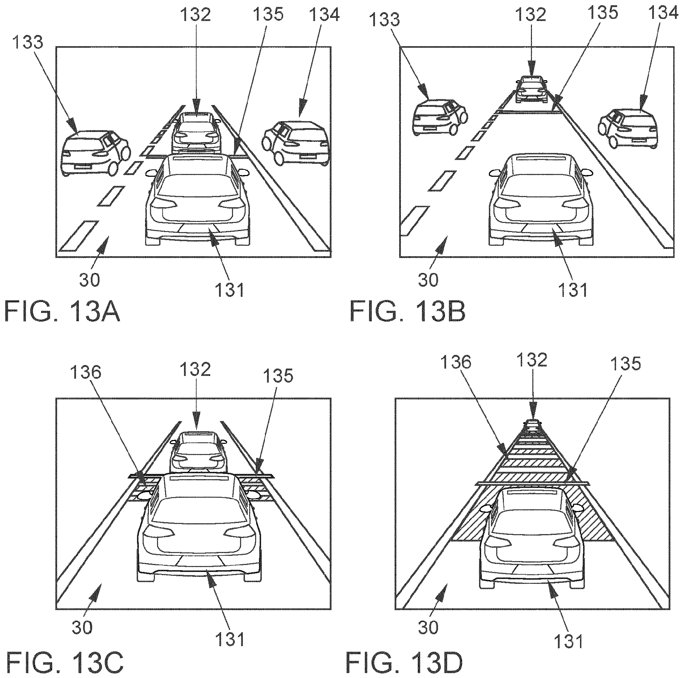

Mit Bezug zu den Figuren 13A bis 13D werden Ausführungsbeispiele von Fahrerinformationsanzeigen beim Einstellen einer Regeldistanz erläutert. Dabei wird wiederum von den oben erläuterten weiteren Ausführungsbeispielen ausgegangen.

Bei den in den Figuren 13A und 13B gezeigten Fällen wird ein Fahrspur-Objekt 30 dargestellt, welches die Fahrbahn repräsentiert, auf der sich das Ego-Fahrzeug 1 bewegt. Dieses Fahrspur-Objekt wird in der Anzeige durch Fahrbahnmarkierungen rechts 30b und links 30a an den Rändern der aktuellen Fahrspur des Ego-Fahrzeugs 1 begrenzt. Die Anzeige umfasst ferner ein Ego-Objekt 131, welches das Ego-Fahrzeug 1 repräsentiert. Zudem sind weitere Verkehrsteilnehmer 132, 133, 134 dargestellt, insbesondere ein vorausfahrendes Fahrzeug 132 sowie weitere Verkehrsteilnehmer 133, 134 auf benachbarten Fahrspuren.

In Fahrtrichtung in einem bestimmten Abstand vor dem Ego-Objekt 131 ist quer zur Fahrtrichtung ein als Linie ausgebildetes Abstands-Objekt 135 im Wesentlichen über die Breite der aktuellen Fahrspur des Ego-Objekts 131 dargestellt. Dieses zeigt anhand des Abstands zwischen dem Ego-Objekt 131 und dem Abstands-Objekt 135 einen Sicherheitsabstand zwischen dem Ego-Fahrzeug 1 und einem vorausfahrenden weiteren Verkehrsteilnehmer an, für dessen Einhaltung das Fahrerassistenzsystem 6 des Ego-Fahrzeugs 1 zumindest teilweise automatisch in die Fahrzeugsteuerung eingreift.

Die Fahrsituationen, in denen die Darstellungen der Figuren 13A und 13B erzeugt werden, unterscheiden sich dadurch, dass sich das Ego-Fahrzeug 1 im Fall der Figur 13A mit einer langsameren Geschwindigkeit bewegt als im Fall der Figur 13B. Das heißt, der zu einem vorausfahrenden weiteren Verkehrsteilnehmer einzuhaltenden Sicherheitsabstand ist im Fall der Figur 13B größer als bei Figur 13A. Entsprechend ist das Verkehrsteilnehmer-Objekt 132 für den vorausfahrenden weiteren Verkehrsteilnehmer in größerem Abstand zum Ego-Objekt 131 dargestellt und auch das Abstand-Objekt 135 ist in größerem Abstand zum Ego-Objekt 131 dargestellt.

Bei dem Ausführungsbeispiel wird der durch das Fahrerassistenzsystem 6 einzuhaltende Sicherheitsabstand durch einen Parameter eingestellt, dem ein bestimmtes Zeitintervall zugeordnet ist. In Abhängigkeit von diesem Zeitintervall und der aktuellen Geschwindigkeit des Ego-Fahrzeugs 1 wird die Länge des Sicherheitsabstand bestimmt. Hierzu wird insbesondere die Formel s = *v * t* verwendet, wobei s die Länge des Sicherheitsabstands, v die aktuelle Geschwindigkeit des Ego-Fahrzeugs 1 und t das durch den Parameter vorgegebene Zeitintervall bezeichnet.

Bei den Fällen der Figuren 13C und 13D wurde eine Betätigung eines Einstellelement im Ego-Fahrzeug 1 erfasst. Dieses ist beispielsweise von der Erfassungseinheit 2 umfasst oder mit dieser gekoppelt. Bei dem Ausführungsbeispiel handelt es sich um einen Tastschalter, alternativ oder zusätzlich kann auch eine andere Eingabevorrichtung, etwa ein Rädchen oder ein Schieberegler vorgesehen sein. Durch diese Betätigung wird der eingestellte Parameter des Fahrerassistenzsystems 6 verändert.

Diese Veränderung führt dazu, dass die Position des Abstands-Objekts 135 relativ zu dem Ego-Objekt 131 verändert wird. Da bei dem Ausführungsbeispiel eine stufenweise Einstellung des Parameters vorgesehen ist, springt das Abstand-Objekt 135 bei der Betätigung eine Stufe vor oder zurück, das heißt zu einem größeren oder kleineren Abstand relativ zu dem Ego-Objekt 131 in der Darstellung.

Die Darstellung in den Figuren 13C und 13D umfasst ferner ein Abstandseinstellungs-Objekt 136, anhand dessen der Fahrer die potentiell einstellbaren Werte des Parameters erfassen kann. Bei dem Ausführungsbeispiel werden farbig von dem Abstands-Objekt 135 abgehobene Linien oder im Wesentlichen rechteckige Flächen auf dem Fahrspur-Objekt dargestellt, die ein Abstands-Skalenobjekt 136 bilden. Das Abstand-Objekt 135 fungiert als Abstands-Zeigerobjekt, 135 welches anhand des Abstands-Skalenobjekts 136 den tatsächlich eingestellten Wert des Parameters anzeigt. Der Fahrer kann dadurch erkennen, ob der eingestellte Wert des Parameters beispielsweise dem minimalen oder maximalen einstellbaren Wert entspricht beziehungsweise wo zwischen diesen Werten sich der eingestellte Wert befindet.

Die Darstellungen der Figuren 13C und 13D unterscheiden sich wiederum durch die Geschwindigkeit des Ego-Fahrzeugs 1, die bei dem Fall der Figur 13D größer ist als im Fall der Figur 13C. Wie bereits oben mit Bezug zu den Figuren 13A und 13B erläutert, entspricht der Sicherheitsabstand bei den verschiedenen Werten des Parameters je nach der Geschwindigkeit verschiedenen Längen. Diese Proportionalität wirkt sich auf die Darstellung des Abstandseinstellungs-Objekts 135 in ähnlichem Maße aus wie auf die Anordnung des Abstands-Objekts 135. Bei dem Ausführungsbeispiel wird die Darstellung des Abstandseinstellungs-Objekts 136 bei höherer Geschwindigkeit in Fahrtrichtung gestreckt.

Bei weiteren Ausführungsbeispielen ist der Wert des Parameters stufenlos oder mit einer größeren Anzahl von Stufen einstellbar. Das Abstandseinstellungs-Objekt 136 kann auf andere Weise gebildet werden, beispielsweise mit einer Farbskala oder einer anderen Skala mittels eines grafischen Darstellungsmerkmals, das entlang der Längsausdehnung in Fahrtrichtung variiert wird.

Die oben erläuterten Ausführungsbeispiele verdeutlichen gemäß den Patentansprüchen notwendige oder optionale Merkmale des erfindungsgemäßen Verfahrens. Die in separaten Ausführungsbeispielen erläuterten Merkmale können beliebig kombiniert werden, insbesondere um die Erfindung in einem umfassenden Verfahren oder System zu verwirklichen.

### Bezugszeichenliste

- 1: Ego-Fahrzeug
- 2: Erfassungseinheit; Sensor
- 3: Steuereinheit
- 4: Anzeigeeinheit
- 5: Auswertungseinheit
- 6: Fahrerassistenzsystem
- 7: Beleuchtungseinrichtung
- 8: Anhängevorrichtung
- 10: Externe Einheit; externer Server
- 20: Fahrbahn
- 20a: Fahrspur
- 20b: Fahrspur
- 20c: Fahrbahnmarkierung
- 21: Ego-Fahrzeug
- 22: Pfeil
- 23: Vorausfahrendes Fahrzeug
- 24: Entgegenkommendes Fahrzeug
- 25: Verkehrsschild
- 30: Fahrspurobjekt
- 30a, 30b: Fahrbahnmarkierung (Darstellung)
- 31: Ego-Fahrzeug (Darstellung)
- 32: Kurvenbereich (Darstellung)
- 32a, 32b: Fahrbahnmarkierung im Kurvenbereich (Darstellung)
- 33a, 33b: Verkehrsschild (Darstellung)
- 40a, 40b: Benachbarte Fahrspur (Darstellung)
- 61: Verkehrsteilnehmer-Objekt, vorausfahrendes Fahrzeug (Darstellung)
- 62, 63: Verkehrsteilnehmer-Objekt, Fahrzeug auf benachbarter Fahrspur (Darstellung)
- 65: Signal-Objekt, Pfeil
- 71, 72: Gegenverkehr-Warnobjekt
- 80: Fahrtrichtungsanzeiger
- 81: Bremsleuchte
- 82: Rückleuchte
- 90: Anhänger-Objekt (Darstellung)
- 101a, 101b: Ego-Objekt
- 102: Verkehrsteilnehmer-Objekt; vorausfahrendes Fahrzeug
- 103, 104: Verkehrsteilnehmer-Objekt
- 105: Abstands-Objekt
- 106a, 106b, 107a, 107b: Fahrbahnmarkierung (Darstellung)
- 111: Ego-Objekt
- 112: Verkehrsteilnehmer-Objekt; vorausfahrendes Fahrzeug
- 113a, 113b: generisches Verkehrsteilnehmer-Objekt
- 113c: spezifisches Verkehrsteilnehmer-Objekt
- 114: Verkehrsteilnehmer-Objekt
- 115: Pfeil; Fahrtrichtung
- 116: Ego-Fahrzeug
- 117: Weiterer Verkehrsteilnehmer
- 118: Hinterer Erfassungsbereich
- 119: Vorderer Erfassungsbereich
- 120: Verkehrsteilnehmer-Objekt; vorausfahrendes Fahrzeug
- 121: Ego-Objekt
- 122a, 122b:
- 131: Ego-Objekt
- 132: Verkehrsteilnehmer-Objekt; vorausfahrendes Fahrzeug
- 133, 134: Verkehrsteilnehmer-Objekt
- 135: Abstands-Objekt; Abstands-Zeigerobjekt
- 136: Abstandseinstellungs-Objekt; Abstands-Skalenobjekt

## Patentansprüche

1. Verfahren zum Betreiben eines Fahrerinformationssystems in einem Ego-Fahrzeug (1), bei dem
ein weiterer Verkehrsteilnehmer (23) in einem vor dem Ego-Fahrzeug (1) liegenden Fahrbahnbereich erfasst wird;
durch ein Fahrerassistenzsystem (6) für eine zumindest teilweise automatische Quersteuerung des Ego-Fahrzeugs (1) in Abhängigkeit von dem weiteren Verkehrsteilnehmer (23) eine Soll-Trajektorie des Ego-Fahrzeugs (1) erzeugt wird; und
eine Fahrerinformationsanzeige erzeugt und ausgegeben wird; wobei
die Fahrerinformationsanzeige ein grafisches Verkehrsteilnehmer-Objekt (120) umfasst, das den weiteren Verkehrsteilnehmer (23) repräsentiert;
die Fahrerinformationsanzeige ferner ein Trajektorien-Objekt (122a, 122b) umfasst, welches die Soll-Trajektorie des Ego-Fahrzeugs (1) repräsentiert,
ein darstellungsrelevantes Merkmal des weiteren Verkehrsteilnehmers (23) erfasst wird; und
das dem weiteren Verkehrsteilnehmer (23) zugeordnete Verkehrsteilnehmer-Objekt (120) in Abhängigkeit von dem darstellungsrelevanten Merkmal gebildet wird, **dadurch gekennzeichnet, dass**
das darstellungsrelevante Merkmal einen Zustand einer Beleuchtungsanlage des weiteren Verkehrsteilnehmers (23) betrifft.

2. Verfahren gemäß Anspruch 1,
**dadurch gekennzeichnet, dass**
die Fahrerinformationsanzeige ein grafisches Fahrspurobjekt (30) umfasst, das einen vor dem Ego-Fahrzeug (1) liegenden Fahrbahnverlauf repräsentiert; wobei
das Fahrspurobjekt (30) so gebildet ist, dass es einer perspektivischen Darstellung des Fahrbahnverlaufs entspricht und einen Krümmungsradius so umfasst, dass der tatsächliche Krümmungsradius einer Kurve des Fahrbahnverlaufs ausgegeben wird.

3. Verfahren gemäß einem der vorhergehenden Ansprüche,
**dadurch gekennzeichnet, dass**
die Fahrerinformationsanzeige ein Ego-Objekt (121) umfasst, welches das Ego-Fahrzeug (1) repräsentiert; und
sich das Trajektorien-Objekt (122a, 122b) von dem Ego-Objekt (121) zu dem Verkehrsteilnehmer-Objekt (120) erstreckt.

4. Verfahren gemäß einem der vorhergehenden Ansprüche,
**dadurch gekennzeichnet, dass**
ein geplanter Spurwechsel des Ego-Fahrzeugs (1) erfasst wird; und
die Soll-Trajektorie des Ego-Fahrzeugs (1) für den Spurwechsel bestimmt wird.

5. Verfahren gemäß einem der vorhergehenden Ansprüche,
**dadurch gekennzeichnet, dass**
eine datentechnische Verbindung zwischen dem Ego-Fahrzeug (1) und dem weiteren Verkehrsteilnehmer (23) aufgebaut wird; und
das darstellungsrelevante Merkmal mittels der datentechnischen Verbindung erfasst wird.

6. Verfahren gemäß einem der vorhergehenden Ansprüche,
**dadurch gekennzeichnet, dass**
ein Betriebszustand des Fahrerassistenzsystems (6) des Ego-Fahrzeugs (1) erfasst wird; und
anhand des erfassten Betriebszustandes des Fahrerassistenzsystems (6) eine Automatisierungsstufe bestimmt wird; wobei
die Fahrerinformationsanzeige eine Darstellung des Umfelds des Ego-Fahrzeugs (1) umfasst, die in Abhängigkeit von der bestimmten Automatisierungsstufe gebildet wird.

7. Verfahren gemäß einem der vorhergehenden Ansprüche,
**dadurch gekennzeichnet, dass**
ein in Fahrtrichtung vor dem Ego-Fahrzeug (1) liegender Fahrbahnverlauf einschließlich eines Krümmungsradius' einer Kurve detektiert wird;
Bewegungsdaten des Ego-Fahrzeugs (1) erfasst werden;
anhand der erfassten Bewegungsdaten und des detektierten Krümmungsradius' eine Kritikalität bestimmt wird; und
das grafische Fahrspurobjekt (30) ein Hervorhebungsmerkmal aufweist, das in Abhängigkeit von der bestimmten Kritikalität gebildet wird.

8. Fahrerinformationssystem in einem Ego-Fahrzeug (1), mit
einer Erfassungseinheit (2), die dazu eingerichtet ist, einen weiteren Verkehrsteilnehmer (23) in einem vor dem Ego-Fahrzeug (1) liegenden Fahrbahnbereich zu erfassen;
ein Fahrerassistenzsystem (6) für eine zumindest teilweise automatische Quersteuerung des Ego-Fahrzeugs (1), das dazu eingerichtet ist, in Abhängigkeit von dem weiteren Verkehrsteilnehmer (23) eine Soll-Trajektorie des Ego-Fahrzeugs (1) zu erzeugen; und
einer Steuereinheit (3), die dazu eingerichtet ist, eine Fahrerinformationsanzeige zu erzeugen und auszugeben; wobei
die Fahrerinformationsanzeige ein grafisches Verkehrsteilnehmer-Objekt (120) umfasst, das den weiteren Verkehrsteilnehmer (23) repräsentiert; und
die Fahrerinformationsanzeige ferner ein Trajektorien-Objekt (122a, 122b) umfasst, welches die Soll-Trajektorie des Ego-Fahrzeugs (1) repräsentiert,
ein darstellungsrelevantes Merkmal des weiteren Verkehrsteilnehmers (23) erfassbar ist; und
das dem weiteren Verkehrsteilnehmer (23) zugeordnete Verkehrsteilnehmer-Objekt (120) in Abhängigkeit von dem darstellungsrelevanten Merkmal ausgebildet ist;
**dadurch gekennzeichnet, dass**
das darstellungsrelevante Merkmal einen Zustand einer Beleuchtungsanlage des weiteren Verkehrsteilnehmers (23) betrifft.

9. Fahrerinformationssystem gemäß Anspruch 8,
**dadurch gekennzeichnet, dass**
die Anzeigeeinheit (4) eine Blickfeldanzeige zum Ausgeben der Fahrerinformationsanzeige umfasst.

## Claims

1. Method for operating a driver information system in an ego vehicle (1), in which
a further road user (23) is detected in a road region located in front of the ego vehicle (1);
a desired trajectory of the ego vehicle (1) is generated by a driver assistance system (6) for at least partly automatic transverse control of the ego vehicle (1) depending on the further road user (23); and
a driver information display is generated and output;
the driver information display comprising a graphical road user object (120) which represents the further road user (23);
the driver information display further comprising a trajectory object (122a, 122b) which represents the desired trajectory of the ego vehicle (1),
a view-relevant feature of the further road user (23) being detected; and
the road user object (120) associated with the further road user (23) being formed depending on the view-relevant feature, **characterized in that**
the view-relevant feature relates to a state of a lighting system of the further road user (23).

2. Method according to claim 1,
**characterized in that**
the driver information display comprises a graphical lane object (30) which represents the course of the road located in front of the ego vehicle (1);
the traffic lane object (30) being formed in such a way that it corresponds to a perspective view of the course of the road and has a radius of curvature such that the actual radius of curvature of a curve of the course of the road is output.

3. Method according to any of the preceding claims,
**characterized in that**
the driver information display comprises an ego object (121) which represents the ego vehicle (1); and
the trajectory object (122a, 122b) extends from the ego object (121) to the road user object (120).

4. Method according to any of the preceding claims,
**characterized in that**
a planned lane change of the ego vehicle (1) is detected; and
the desired trajectory of the ego vehicle (1) is determined for the lane change.

5. Method according to any of the preceding claims,
**characterized in that**
a data connection is established between the ego vehicle (1) and the further road user (23); and
the view-relevant feature is detected by means of the data connection.

6. Method according to any of the preceding claims,
**characterized in that**
an operating state of the driver assistance system (6) of the ego vehicle (1) is detected; and
an automation stage is determined on the basis of the detected operating state of the driver assistance system (6);
the driver information display comprising a view of the surroundings of the ego vehicle (1), which is formed depending on the determined automation stage.

7. Method according to any of the preceding claims,
**characterized in that**
a course of the road, including a radius of curvature' of a curve, located in front of the ego vehicle (1) in the direction of travel is acquired;
movement data of the ego vehicle (1) are detected;
a criticality is determined on the basis of the detected movement data and the captured radius of curvature; and
the graphical lane object (30) has a highlighting feature which is formed depending on the determined criticality.

8. Driver information system in an ego vehicle (1), comprising
a detection unit (2), which is configured to detect a further road user (23) in a road region located in front of the ego vehicle (1);
a driver assistance system (6) for at least partly automatic transverse control of the ego vehicle (1), which is configured to generate a desired trajectory of the ego vehicle (1) depending on the further road user (23); and
a control unit (3), which is configured to generate and output a driver information display;
the driver information display comprising a graphical road user object (120) which represents the further road user (23); and
the driver information display further comprising a trajectory object (122a, 122b) which represents the desired trajectory of the ego vehicle (1),
it being possible for a view-relevant feature of the further road user (23) to be detected; and
the road user object (120) associated with the further road user (23) being formed depending on the view-relevant feature;
**characterized in that**
the view-relevant feature relates to a state of a lighting system of the further road user (23).

9. Driver information system according to claim 8,
**characterized in that**
the display unit (4) comprises a head-up display for outputting the driver information display.

## Revendications

1. Procédé permettant de faire fonctionner un système d'information du conducteur dans un égo-véhicule (1), dans lequel
un autre usager de la route (23) est détecté dans une zone de chaussée située devant l'égo-véhicule (1) ;
au moyen d'un système d'aide au conducteur (6) pour une commande transversale au moins partiellement automatique de l'égo-véhicule (1), une trajectoire de consigne de l'égo-véhicule (1) est générée en fonction de l'autre usager de la route (23) ; et
un affichage d'information du conducteur est généré et fourni ; dans lequel
l'affichage d'information du conducteur comprend un objet d'usager de la route (120) graphique qui représente l'autre usager de la route (23) ;
l'affichage d'information du conducteur comprend en outre un objet de trajectoire (122a, 122b) qui représente la trajectoire de consigne de l'égo-véhicule (1),
une caractéristique pertinente pour la représentation de l'autre usager de la route (23) est détectée ; et
l'objet d'usager de la route (120) associé à l'autre usager de la route (23) est formé en fonction de la caractéristique pertinente pour la représentation, **caractérisé en ce que**
la caractéristique pertinente pour la représentation concerne un état d'une installation d'éclairage de l'autre usager de la route (23).

2. Procédé selon la revendication 1,
**caractérisé en ce que**
l'affichage d'information du conducteur comprend un objet de voie de circulation (30) graphique qui représente le tracé de la chaussée situé devant l'égo-véhicule (1) ; dans lequel
l'objet de voie de circulation (30) est formé de sorte qu'il correspond à une représentation en perspective du tracé de la chaussée et comprend un rayon de courbure, de sorte que le rayon de courbure réel d'un virage du tracé de la chaussée est fourni.

3. Procédé selon l'une des revendications précédentes,
**caractérisé en ce que**
l'affichage d'information du conducteur comprend un objet d'égo (121) qui représente l'égo-véhicule (1) ; et
l'objet de trajectoire (122a, 122b) s'étend de l'objet d'égo (121) à l'objet d'usager de la route (120).

4. Procédé selon l'une des revendications précédentes,
**caractérisé en ce que**
un changement de voie prévu de l'égo-véhicule (1) est détecté ; et
la trajectoire de consigne de l'égo-véhicule (1) est déterminée pour le changement de voie.

5. Procédé selon l'une des revendications précédentes,
**caractérisé en ce que**
une liaison selon la technique des données est établie entre l'égo-véhicule (1) et l'autre usager de la route (23) ; et
la caractéristique pertinente pour la représentation est détectée au moyen de la liaison selon la technique des données.

6. Procédé selon l'une des revendications précédentes,
**caractérisé en ce que**
un état de fonctionnement du système d'aide au conducteur (6) de l'égo-véhicule (1) est détecté ; et
un niveau d'automatisation est déterminé au moyen de l'état de fonctionnement détecté du système d'aide au conducteur (6) ; dans lequel
l'affichage d'information du conducteur comprend une représentation de l'environnement de l'égo-véhicule (1) qui est formée en fonction du niveau d'automatisation déterminé.

7. Procédé selon l'une des revendications précédentes,
**caractérisé en ce que**
un tracé de la chaussée, y compris un rayon de courbure d'un virage, situé devant l'égo-véhicule (1) dans le sens de la conduite est détecté ;
des données de déplacement de l'égo-véhicule (1) sont détectées ;
une criticité est déterminée à l'aide des données de déplacement détectées et du rayon de courbure détecté ; et
l'objet de voie de circulation (30) graphique présente une caractéristique d'accentuation qui est formée en fonction de la criticité déterminée.

8. Système d'information du conducteur dans un égo-véhicule (1), comportant
une unité de détection (2) qui est configurée pour détecter un autre usager de la route (23) dans une section de chaussée située devant l'égo-véhicule (1) ;
un système d'aide au conducteur (6) pour une commande transversale au moins partiellement automatique de l'égo-véhicule (1), lequel système est configuré pour générer une trajectoire de consigne de l'égo-véhicule (1) en fonction de l'autre usager de la route (23) ; et
une unité de commande (3) qui est configurée pour générer et fournir un affichage d'information du conducteur ; dans lequel
l'affichage d'information du conducteur comprend un objet d'usager de la route (120) graphique qui représente l'autre usager de la route (23) ; et
l'affichage d'information du conducteur comprend en outre un objet de trajectoire (122a, 122b) qui représente la trajectoire de consigne de l'égo-véhicule (1),
une caractéristique pertinente pour la représentation de l'autre usager de la route (23) peut être détectée ; et
l'objet d'usager de la route (120) associé à l'autre usager de la route (23) est réalisé en fonction de la caractéristique pertinente pour la représentation ;
**caractérisé en ce que**
la caractéristique pertinente pour la représentation concerne un état d'une installation d'éclairage de l'autre usager de la route (23).

9. Système d'information du conducteur selon la revendication 8,
**caractérisé en ce que**
l'unité d'affichage (4) comprend un affichage tête haute pour la fourniture de l'affichage d'information du conducteur.
